(19) Europäisches Patentamt
European Patent Office
Office européen des brevets

(11) EP 3 041 883 B1

(12) # EUROPÄISCHE PATENTSCHRIFT

(45) Veröffentlichungstag und Bekanntmachung des Hinweises auf die Patenterteilung:
**11.04.2018 Patentblatt 2018/15**

(21) Anmeldenummer: **14758393.4**

(22) Anmeldetag: **01.09.2014**

(51) Int Cl.:
***C08G 65/26*** *(2006.01)* ***C08G 64/34*** *(2006.01)*

(86) Internationale Anmeldenummer:
**PCT/EP2014/068515**

(87) Internationale Veröffentlichungsnummer:
**WO 2015/032720 (12.03.2015 Gazette 2015/10)**

(54) **HÖHERFUNKTIONELLE POLYETHERCARBONATPOLYOLE ERHALTEN UNTER EINSATZ VON VERZWEIGERMOLEKÜLEN**

HIGHER FUNCTION POLYETHER CARBONATE POLYOLS OBTAINED BY USE OF BRANCHED MOLECULES

POLYOLS DE POLYÉTHERCARBONATES À FONCTIONNALITÉ SUPÉRIEURE OBTENUS EN UTILISANT DES MOLÉCULES RAMIFIÉES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **05.09.2013 EP 13183200**

(43) Veröffentlichungstag der Anmeldung:
**13.07.2016 Patentblatt 2016/28**

(73) Patentinhaber: **Covestro Deutschland AG**
**51373 Leverkusen (DE)**

(72) Erfinder:
- **MÜLLER, Thomas, Ernst**
  **52074 Aachen (DE)**
- **GÜRTLER, Christoph**
  **50735 Köln (DE)**
- **SUBHANI, Muhammad, Afzal**
  **52066 Aachen (DE)**
- **KÖHLER, Burkhard**
  **34289 Zierenberg (DE)**
- **LEITNER, Walter**
  **52074 Aachen (DE)**

(74) Vertreter: **Levpat**
**c/o Covestro AG**
**Gebäude 4825**
**51365 Leverkusen (DE)**

(56) Entgegenhaltungen:
**WO-A1-2008/092767** **WO-A1-2010/028362**
**WO-A2-2012/033375** **US-A- 3 699 079**
**US-A- 4 789 727**

- **REN-JIAN WEI ET AL: "Synthesis of bis(cyclic carbonate) and proylene carbonate", RSC ADVANCES, Bd. 3, 22. Juli 2013 (2013-07-22), Seiten 17307-17313, XP002723579,**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 3 041 883 B1

**Beschreibung**

Die vorliegende Erfindung betrifft ein Verfahren zur Herstellung höherfunktioneller Polyethercarbonatpolyole umfassend vorzugsweise die Schritte (α) Vorlegen eines Suspensionsmittels, das keine H-funktionellen Gruppen enthält und/oder einer H-funktionellen Starterverbindung und eines DMC-Katalysators, (β) Zudosieren mindestens eines Alkylenoxides und Kohlendioxid (γ) Zudosieren von Kohlendioxid und mindestens zweier Alkylenoxide, wobei diese Alkylenoxide von dem im Schritt (β) zudosierten Alkylenoxid oder zudosierten Alkylenoxiden gleich oder verschieden sein können und (δ) Zudosieren mindestens eines Alkylenoxides und Kohlendioxid, wobei dieses oder diese Alkylenoxide von den im Schritt (β) und (γ) zudosierten Alkylenoxiden gleich oder verschieden sein können, und wobei mindestens eines der Alkylenoxide in Schritt (γ) eine Epoxyfunktionalität von ≥ 2 aufweist.

Moderne Kunststoffe sollen neben einer maßgeschneiderten Funktionalität auch verstärkt ökologischen Gesichtspunkten Rechnung tragen. Dies kann, neben einer allgemeinen Optimierung von Herstellprozessen, auch durch den Einsatz von Treibhausgasen, wie Kohlendioxid, als Synthesebausteine zum Aufbau von Polymeren erreicht werden. So lässt sich zum Beispiel über die Fixierung von Kohlendioxid insgesamt eine bessere Prozess-Umweltbilanz erhalten. Dieser Weg wird im Bereich der Herstellung von Polyethercarbonaten beschritten und bildet seit mehr als 40 Jahren Stand intensiver Forschung (z. B. Inoue et al, Copolymerization of Carbon Dioxide and Alkylenoxide with Organometallic Compounds; Die Makromolekulare Chemie 130, 210-220, 1969). In einer möglichen Herstellungsvariante werden dabei Polyethercarbonatpolyole durch eine katalytische Umsetzung von Alkylenoxiden und Kohlendioxid in Anwesenheit H-funktioneller Starterverbindungen ("Starter") erhalten. Eine allgemeine Reaktionsgleichung hierfür ist in Schema (I) gegeben:

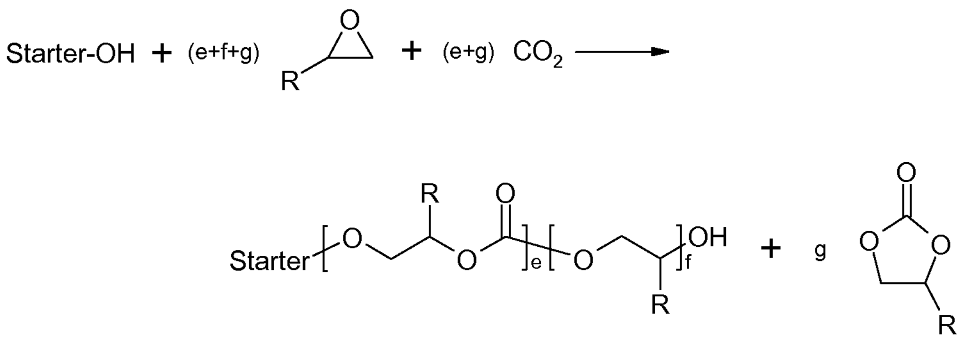

(I)

Als weiteres Produkt, hier ein unerwünschtes Nebenprodukt, entsteht neben dem Polyethercarbonatpolyol ein cyclisches Carbonat (beispielsweise für R = $CH_3$ Propylencarbonat). In der Literatur werden einige unterschiedliche Herstellvarianten beschrieben. So beschreibt zum Beispiel die US 20100048935 A1 ein Verfahren zur Herstellung von Polyethercarbonatpolyolen durch Umsetzung von Alkylenoxiden und Kohlendioxid mit H-funktionellen Starterverbindungen mittels eines DMC-Katalysators, in welchem eine oder mehrere Starterverbindungen in einem Reaktor vorgelegt und des Weiteren eine oder mehrere Starterverbindungen kontinuierlich im Laufe der Reaktion zudosiert werden. Als ein mögliches Alkylenoxid wird epoxidiertes Sojaöl erwähnt. Die Reaktivität dieser Oxiranringe ist jedoch gering, da sie im Inneren einer Kette liegen und sterisch stark abgeschirmt sind. Daher wird das epoxidierte Sojaöl langsamer umgesetzt als übliche Monomere, wie Propylenoxid, und reichert sich in der Reaktionsmischung an. Da epoxidiertes Sojaöl zudem eine Mischung mehrfach epoxidierter Verbindungen darstellt, ist ein gezielter Aufbau definierter Polymerarchitekturen nicht möglich.

Die WO 2006/103213 A1 hingegen beschreibt ein Verfahren zur Herstellung von Polyethercarbonatpolyolen mit verbesserten Einbau von $CO_2$ in das Polyethercarbonatpolyol unter Verwendung eines Katalysator aufweisend ein Multimetall-Cyanid. Die Schrift offenbart die Anwesenheit eines H-funktionellen Starters, eines Alkylenoxides und Kohlendioxid in Gegenwart der Multimetall-Cyanid-Komponente in einem Reaktor. Des Weiteren offenbart das Dokument die Anwesenheit einer $CO_2$-philen Substanz oder $CO_2$-philer Substituenten. Die $CO_2$-phile Substanz oder der $CO_2$-phile Substituent soll den Einbau des $CO_2$ in das Polyethercarbonatpolyol erleichtern und derart die Bildung cyclischer Alkylencarbonate, wie zum Beispiel Propylencarbonat, welche unerwünschte Nebenprodukte darstellen, reduzieren.

WO 2012/033375 A2 offenbart ein Verfahren zur Herstellung vernetzter Polycarbonatpolyole durch alternierende Anlagerung von Kohlendioxid und Alkylenoxiden an H-funktionelle Starterverbindungen in Gegenwart eines Katalysators.

US 3 699 079 A offenbart ein Verfahren zur Herstellung von Copolymeren aus Kohlendioxid und Diepoxiden in Gegenwart eines Katalysator-Systems.

REN-JIAN WEI et al. "Synthesis of bis(cyclic carbonate) and proylenecarbonate", RSC ADVANCES, Bd. 3, 22. Juli 2013 (2013-07-22), Seiten 17307-17313 offenbart ein Verfahren zur Herstellung von cyclischen Carbonaten durch

eine Kupplungsreaktion von Kohlendioxid, Diepoxiden und Propylenoxid in Gegenwart eines Katalysator-Systems. Eine Copolymerisation in Gegenwart von H-funktionellen Starterverbindungen wird nicht offenbart.

US4 789 727 A offenbart eine Copolymerisation von Alkylenoxiden mit $CO_2$ zu Polycarbonaten in Gegenwart von kleinen Mengen an Diepoxiden mit Zinkcarboxylat als Katalysator.

WO 2010/028362 A1 offenbart zahlreiche Ausführungsformen zur Copolymerisation von Alkylenoxiden mit $CO_2$ in Gegenwart eines Metallkomplex-Katalysators.

WO 2008/092767 A1 offenbart ein Mehrschrittverfahren zur Herstellung von Polyethercarbonatpolyolen durch katalytische Anlagerung von Kohlendioxid und Alkylenoxiden an H - funktionelle Starterverbindungen in Gegenwart von Doppelmetallcyanid (DMC) -Katalysator.

Des Weiteren kann es aber wünschenswert sein noch höherfunktionelle Polyethercarbonatpolyole zu erhalten, welche eine zur Weiterverarbeitung geeignete Viskosität und eine höhere Anzahl an reaktiven, endständigen Gruppen aufweisen. Diese Polymere können vorteilhafterweise auch verzweigt aufgebaut sein und in weiteren Vernetzungsreaktionen zu vernetzten Polyethercarbonat-Polymeren führen, welche verbesserte Formkörper- oder Filmeigenschaften aufweisen.

Prinzipiell lassen sich höherfunktionelle Polyethercarbonatpolyole auch erhalten, in dem man oligomere multifunktionelle Startermoleküle, meistens mit funktionellen OH-Gruppen, einsetzt. Die Viskosität der solchermaßen erhaltenen Produkte ist jedoch häufig erhöht. Ferner müssen solche Starter oft in einem separaten Schritt synthetisiert werden. Die Synthese der Starter erfolgt meist unter Verwendung von Basen als Katalysator. Vor einer Verwendung dieser Starter in einer Katalyse mit DMC-Katalysatoren müssen diese aufwendig von basischen Katalysatorresten gereinigt werden. Der Einsatz von niedermolekularen multifunktionellen Startermolekülen führt zu einer herabgesetzten Aktivität oder gar einer vollständigen Inhibierung des DMC-Katalysators. Daher müssen hohe Katalysator-Konzentrationen eingesetzt oder lange Reaktionszeiten in Kauf genommen werden. Mit multifunktionellen Startermolekülen hergestellte Polyethercarbonatpolyole weisen bei gleicher OH-Zahl eine mit der Funktionalität steigende Viskosität auf. So beschreibt EP 12181907,2-1301 für ein Polyethercarbonat, das unter Verwendung von Glycerin als trifunktionellem Starter erhalten wurde, eine deutlich erhöhte Viskosität (36,0 Pa·s) im Vergleich mit einem Polyethercarbonat, das unter Verwendung von Dipropylenglykol als bifunktionellem Starter erhalten wurde (4,1 Pa·s).

Die Aufgabe der vorliegenden Erfindung war es daher, ein kostengünstiges und effizientes Verfahren zur Herstellung höherfunktioneller Polyethercarbonatpolyole aus H-funktionellen Starterverbindungen, Alkylenoxiden, $CO_2$ sowie Alkylenoxiden mit einer Epoxyfunktionalität von $\geq 2$ bereit zu stellen, wobei die höherfunktionellen Polyethercarbonatpolyole im Vergleich mit linearen Polyethercarbonatpolyolen eine niedrige Viskosität und eine hohe Reaktivität der Endgruppen aufweisen sollten. Des Weiteren ist es die Aufgabe der vorliegenden Erfindung, eine neue Verwendung dieser höherfunktionellen Polyethercarbonatpolyole als niederviskose hochreaktive Bausteine für die Herstellung von Polyurethanen aufzuzeigen.

Die Aufgabe wird gelöst durch ein Verfahren zur Herstellung höherfunktioneller Polyethercarbonatpolyole durch Umsetzung von mindestens zwei Alkylenoxiden und Kohlendioxid mit H-funktionellen Starterverbindungen, dadurch gekennzeichnet, dass mindestens eines der Alkylenoxide eine Epoxyfunktionalität von $\geq 2$ aufweist.

Vorzugsweise umfasst das Verfahren die Schritte:

($\alpha$) Vorlegen eines Doppelmetallcyanid-Katalysators und

($\alpha\alpha$) eines Suspensionsmittels, das keine H-funktionellen Gruppen enthält und/oder

($\alpha\beta$) einer H-funktionellen Starterverbindung,

($\gamma$) Zudosieren von Kohlendioxid und mindestens zweier Alkylenoxide und

($\delta$) Zudosieren von Kohlendioxid und mindestens eines Alkylenoxides, wobei dieses oder diese Alkylenoxide von den im Schritt ($\gamma$) zudosierten Alkylenoxiden gleich oder verschieden sein können,

wobei mindestens eines der Alkylenoxide in Schritt ($\gamma$) eine Epoxyfunktionalität von $\geq 2$ aufweist und wobei für den Fall, dass in Schritt ($\alpha$) keine H-funktionelle Starterverbindung vorgelegt wurde, der Schritt ($\delta$) das Zudosieren einer H-funktionellen Starterverbindung umfasst.

Es ist weiterhin bevorzugt, dass das Verfahren den Schritt ($\beta$) zwischen Schritt ($\alpha$) und Schritt ($\gamma$) umfasst:

($\beta$) Zudosieren von Kohlendioxid und mindestens eines Alkylenoxides,

wobei weiterhin die in Schritt ($\gamma$) zudosierten mindestens zwei Alkylenoxide von dem im Schritt ($\beta$) zudosierten Alkylenoxid oder zudosierten Alkylenoxiden gleich oder verschieden sein können und das oder die in Schritt ($\delta$) zudosierten Alky-

lenoxide(e) von den im Schritt (β) und (γ) zudosierten Alkylenoxiden gleich oder verschieden sein können.

Überraschenderweise wurde gefunden, dass diese Verfahrensführung zu einem effizienten Einbau eines Alkylenoxides mit einer Epoxyfunktionalität von ≥ 2 in eine wachsende Polymerkette führt, welche dann anschließend mit weiteren Polymerketten unter Beibehaltung der funktionellen Endgruppen verknüpft. Auf diese Art und Wiese erhält man höherfunktionelle Polyethercarbonatpolyole mit einer erhöhten Anzahl von funktionellen Endgruppen je Molekül (durchschnittliche OH-Funktionalität) bei gleichbleibender Anzahl funktioneller Gruppen je Gewichtseinheit Polymer. Der Einbau di- und mehrfachfunktioneller Alkylenoxide führt jeweils zu einer Verzweigung der wachsenden Polymerkette. Di- und mehrfachfunktionelle Alkylenoxide werden im Folgenden deshalb Verzweigermoleküle genannt. Derart sind reproduzierbar höherfunktionelle Polyethercarbonatpolyole mit einer definierten Funktionalität F erhältlich, welche sich insbesondere für den Einsatz in weiteren Vernetzungsreaktionen eignen.

Die erfindungsgemäßen höherfunktionellen Polyethercarbonatpolyole weisen im Vergleich zu linearen Polyethercarbonatpolyolen und Polyethercarbonatpolyolen, die nur unter Einsatz von höherfunktionellen Starterverbindungen erhalten wurden, eine geringere Viskosität bei gleicher OH-Zahl auf, wodurch die technische Handhabbarkeit allgemein verbessert wird. Die nach dem erfindungsgemäßen Verfahren erhältlichen höherfunktionellen Polyethercarbonatpolyole können daher besonders gut verarbeitet werden, insbesondere durch Umsetzung mit Di- und/oder Polyisocyanaten zu Polyurethanen, insbesondere zu Polyurethan-Weichschaumstoffen, Polyurethan-Hartschaumstoffen, Polyurethan-Elastomeren oder Polyurethan-Beschichtungen.

Charakteristisch für die erfindungsgemäß hergestellten höherfunktionellen Polyethercarbonatpolyole ist vorzugsweise auch, dass diese zwischen den Carbonatgruppen auch Ethergruppen enthalten. In Bezug auf Formel (Ia) bedeutet dies, dass das Verhältnis von e/f bevorzugt von 2 : 1 bis 1 : 20, besonders bevorzugt von 1,5 : 1 bis 1 : 10 beträgt.

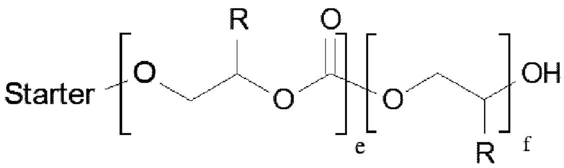

(Ia)

Unter der Funktionalität im Sinne der Erfindung wird die durchschnittliche Anzahl funktioneller Gruppen je Molekül verstanden. "Höherfunktionelle" Polyethercarbonatpolyole im Sinne der vorliegenden Erfindung sind Polyethercarbonatpolyole mit einer durchschnittlichen Anzahl von OH-Gruppen je Polymerkette (durchschnittliche OH-Funktionalität) von mindestens 2. Bevorzugt liegt die durchschnittliche OH-Funktionalität im Bereich 2 < F ≤ 22, besonders bevorzugt 2 < F ≤ 12, und ganz besonders bevorzugt 2 < F ≤ 8. Die Funktionalität der höherfunktionellen Polyethercarbonatpolyole ergibt sich aus dem molaren Verhältnis und der Funktionalität der eingesetzten Starter- und Verzweigermoleküle. Bei Verwendung bifunktioneller Starter in Kombination mit bifunktionellen Verzweigermolekülen kann die durchschnittliche Funktionalität gemäß nachfolgender Formel berechnet werden,

$$F = \frac{n_S \cdot F_S}{[n_S - n_{CL}]} \qquad \text{(II)}$$

wobei

$F_{avg}$ für die durchschnittliche Funktionalität des Polyethercarbonatpolyols,

$n_S$ für die molare Menge an Startermolekülen,

$F_s$ für die Funktionalität des Startermoleküls und

$n_{CL}$ für die molare Menge an Verzweigermolekülen steht.

Die durchschnittliche Funktionalität kann auch experimentell beispielsweise mittels zweidimensionaler Flüssigchromatographie bestimmt werden, wobei die Moleküle zunächst nach ihrem Molekulargewicht und anschließend nach der Wechselwirkung zwischen den OH-Gruppen und dem Säulenmaterial getrennt werden. Ebenfalls ist es möglich, die durchschnittliche Funktionalität über Massenspektroskopie zu bestimmen, wobei die Spektren vor und nach Derivatisierung der OH-Gruppen miteinander verglichen werden. Beispielsweise können die OH-Gruppen durch Austausch der Protonen gegen Deuterium-Ionen oder durch Methylierung derivatisiert werden. Für Moleküle mit einer Funktionalität von 4 steigt beispielsweise durch die Derivatisierung über Austausch der Protonen gegen Deuterium-Ionen die Masse

um vier Da, bei Derivatisierung über Methylierung um 4 × 14 = 56 Da an. Die durchschnittliche Funktionalität ergibt sich als die durchschnittliche Anzahl an OH-Gruppen je Molekül.

Allgemein können für das erfindungsgemäße Verfahren dort, wo keine höherfunktionellen Alkylenoxide (Epoxide) gefordert sind, solche mit 2-45 Kohlenstoffatomen eingesetzt werden. Bei den Alkylenoxiden mit 2 - 45 Kohlenstoffatomen handelt es sich beispielsweise um eine oder mehrere Verbindungen ausgewählt aus der Gruppe bestehend aus Ethylenoxid, Propylenoxid, 1-Butenoxid, 2,3-Butenoxid, 2-Methyl-1,2-propenoxid (Isobutenoxid), 1-Pentenoxid, 2,3-Pentenoxid, 2-Methyl-1,2-butenoxid, 3-Methyl-1,2-butenoxid, 1-Hexenoxid, 2,3-Hexenoxid, 3,4-Hexenoxid, 2-Methyl-1,2-pentenoxid, 4-Methyl-1,2-pentenoxid, 2-Ethyl-1,2-butenoxid, 1-Heptenoxid, 1-Octenoxid, 1-Nonenoxid, 1-Decenoxid, 1-Undecenoxid, 1-Dodecenoxid, 4-Methyl-1,2-pentenoxid, Butadienmonoxid, Isoprenmonoxid, Cyclopentenoxid, Cyclohexenoxid, Cycloheptenoxid, Cyclooctenoxid, Styroloxid, Methylstyroloxid, Pinenoxid, einfach epoxidierte Fette als Mono-, Di- und Triglyceride, einfach epoxidierte Fettsäuren, C1-C24-Ester von einfach epoxidierten Fettsäuren, einfach epoxidierte Derivate des Glycidols wie beispielsweise Methylglycidylether, Ethylglycidylether, 2-Ethylhexylglycidylether, Allylglycidylether, Glycidylmethacrylat sowie epoxyfunktionelle Alkyoxysilane wie beispielsweise 3-Glycidyloxypropyltrimethoxysilan, 3-Glycidyloxypropyltriethoxysilan, 3-Glycidyloxypropyltripropoxysilan, 3-Glycidyloxypropylmethyl-dimethoxysilan, 3-Glycidyloxypropyl-ethyldiethoxysilan, 3-Glycidyloxypropyltriisopropoxysilan. Vorzugsweise werden als Alkylenoxid Ethylenoxid und/oder Propylenoxid, insbesondere Propylenoxid eingesetzt.

Alkylenoxide mit einer Epoxyfunktionalität von ≥ 2 (Verzweigermoleküle) im Sinne der Erfindung sind Di- und Mehrfach-Alkylenoxide, wie mehrfach epoxidierte aliphatische oder cycloaliphatische Verbindungen mit mindestens zwei olefinischen Doppelbindungen oder mehrfache Glycidylether von Diolen, Polyolen, Bisphenolen, aromatischen Verbindungen mit mehr als zwei Hydroxygruppen sowie die mehrfachen Glycidylester von aliphatischen oder aromatischen Dicarbonsäuren und Mehrfachcarbonsäuren. Die Epoxyfunktionalität beträgt dabei zweckmäßigerweise ≥ 2 und ≤ 20, bevorzugt ≥ 2 und ≤ 10 und besonders bevorzugt > 2 und ≤ 4.

Als geeignete H-funktionelle Starterverbindungen (Starter) können Verbindungen mit für die Alkoxylierung aktiven H-Atomen eingesetzt werden. Für die Alkoxylierung aktive Gruppen mit aktiven H-Atomen sind beispielsweise -OH, $-NH_2$ (primäre Amine), -NH- (sekundäre Amine), -SH und $-CO_2H$, bevorzugt sind -OH und $-NH_2$, besonders bevorzugt ist -OH. Als H-funktionelle Starterverbindung wird beispielsweise eine oder mehrere Verbindungen ausgewählt aus der Gruppe bestehend aus ein- oder mehrwertige Alkohole, mehrwertige Amine, mehrwertige Thiole, Aminoalkohole, Thioalkohole, Hydroxyester, Polyetherpolyole, Polyesterpolyole, Polyesteretherpolyole, Polyethercarbonatpolyole, Polycarbonatpolyole, Polycarbonate, Polyethylenimine, Polyetheramine (z.B. sogenannte Jeffamine® von Huntsman, wie z.B. D-230, D-400, D-2000, T-403, T-3000, T-5000 oder entsprechende Produkte der BASF, wie z.B. Polyetheramin D230, D400, D200, T403, T5000), Polytetrahydrofurane (z.B. PolyTHF® der BASF, wie z.B. PolyTHF® 250, 650S, 1000, 1000S, 1400, 1800, 2000), Polytetrahydrofuranamine (BASF Produkt Polytetrahydrofuranamin 1700), Polyetherthiole, Polyacrylatpolyole, Ricinusöl, das Mono- oder Diglycerid von Ricinolsäure, Monoglyceride von Fettsäuren, chemisch modifizierte Mono-, Di- und/oder Triglyceride von Fettsäuren, und C1-C24 Alkyl-Fettsäureester, die im Mittel mindestens 2 OH-Gruppen pro Molekül enthalten, eingesetzt. Beispielhaft handelt es sich bei den C1-C24 Alkyl-Fettsäureester, die im Mittel mindestens 2 OH-Gruppen pro Molekül enthalten, um Handelsprodukte wie Lupranol Balance® (Fa. BASF AG), Merginol®-Typen (Fa. Hobum Oleochemicals GmbH), Sovermol®-Typen (Fa. Cognis Deutschland GmbH & Co. KG) und Soyol®TM-Typen (Fa. USSC Co.).

Als monofunktionelle Starterverbindungen können Alkohole, Amine, Thiole und Carbonsäuren eingesetzt werden. Als monofunktionelle Alkohole können Verwendung finden: Methanol, Ethanol, 1-Propanol, 2-Propanol, 1-Butanol, 2-Butanol, *tert*-Butanol, 3-Buten-1-ol, 3-Butin-1-ol, 2-Methyl-3-buten-2-ol, 2-Methyl-3-butin-2-ol, Propagylalkohol, 2-Methyl-2-propanol, 1-*tert*-Butoxy-2-propanol., 1-Pentanol, 2-Pentanol, 3-Pentanol, 1-Hexanol, 2-Hexanol, 3-Hexanol, 1-Heptanol, 2-Heptanol, 3-Heptanol, 1-Octanol, 2-Octanol, 3-Octanol, 4-Octanol, Phenol, 2-Hydroxybiphenyl, 3-Hydroxybiphenyl, 4-Hydroxybiphenyl, 2-Hydroxypyridin, 3-Hydroxypyridin, 4-Hydroxypyridin. Als monofunktionelle Amine kommen in Frage: Butylamin, *tert*-Butylamin, Pentylamin, Hexylamin, Anilin, Aziridin, Pyrrolidin, Piperidin, Morpholin. Als monofunktionelle Thiole können verwendet werden: Ethanthiol, 1-Propanthiol, 2-Propanthiol, 1-Butanthiol, 3-Methyl-1-butanthiol, 2-Buten-1-thiol, Thiophenol. Als monofunktionelle Carbonsäuren seien genannt: Ameisensäure, Essigsäure, Propionsäure, Buttersäure, Fettsäuren wie Stearinsäure, Palmitinsäure, Ölsäure, Linolsäure, Linolensäure, Benzoesäure, Acrylsäure.

Als H-funktionelle Starterverbindungen geeignete mehrwertige Alkohole sind beispielweise zweiwertige Alkohole (wie beispielweise Ethylenglykol, Diethylenglykol, Propylenglykol, Dipropylenglykol, 1,3-Propandiol, 1,4-Butandiol, 1,4-Butendiol, 1,4-Butindiol, Neopentylglykol, 1,5-Pentantandiol, Methylpentandiole (wie beispielweise 3-Methyl-1,5-pentandiol), 1,6-Hexandiol; 1,8-Octandiol, 1,10-Decandiol, 1,12-Dodecandiol, Bis-(hydroxymethyl)-cyclohexane (wie beispielweise 1,4-Bis-(hydroxymethyl)cyclohexan), Triethylenglykol, Tetraethylenglykol, Polyethylenglykole, Dipropylenglykol, Tripropylenglykol, Polypropylenglykole, Dibutylenglykol und Polybutylenglykole); dreiwertige Alkohole (wie beispielweise Trimethylolpropan, Glycerin, Trishydroxyethylisocyanurat, Rizinusöl); vierwertige Alkohole (wie beispielsweise Pentaerythrit); Polyalkohole (wie beispielweise Sorbit, Hexit, Saccharose, Stärke, Stärkehydrolysate, Cellulose, Cellulosehydrolysate, hydroxyfunktionalisierte Fette und Öle, insbesondere Rizinusöl), sowie alle Modifizierungsprodukte dieser zuvorgenannten Alkohole mit unterschiedlichen Mengen an ε-Caprolacton.

Die H-funktionellen Starterverbindungen können auch aus der Substanzklasse der Polyetherpolyole ausgewählt sein, insbesondere solchen mit einem Molekulargewicht $M_n$ im Bereich von 100 bis 4000 g/mol. Bevorzugt sind Polyetherpolyole, die aus sich wiederholenden Ethylenoxid- und Propylenoxideinheiten aufgebaut sind, bevorzugt mit einem Anteil von 35 bis 100% Propylenoxideinheiten, besonders bevorzugt mit einem Anteil von 50 bis 100% Propylenoxideinheiten. Hierbei kann es sich um statistische Copolymere, Gradienten-Copolymere, alternierende oder Blockcopolymere aus Ethylenoxid und Propylenoxid handeln. Geeignete Polyetherpolyole, aufgebaut aus sich wiederholenden Propylenoxid- und/oder Ethylenoxideinheiten sind beispielsweise die Desmophen®-, Acclaim®-, Arcol®-, Baycoll®-, Bayfill®-, Bayflex®-Baygal®-, PET®- und Polyether-Polyole der Bayer MaterialScience AG (wie z.B. Desmophen® 3600Z, Desmophen® 1900U, Acclaim® Polyol 2200, Acclaim® Polyol 4000I, Arcol® Polyol 1004, Arcol® Polyol 1010, Arcol® Polyol 1030, Arcol® Polyol 1070, Baycoll® BD 1110, Bayfill® VPPU 0789, Baygal® K55, PET® 1004, Polyether® S180). Weitere geeignete homo-Polyethylenoxide sind beispielsweise die Pluriol® E-Marken der BASF SE, geeignete homo-Polypropylenoxide sind beispielsweise die Pluriol® P-Marken der BASF SE, geeignete gemischte Copolymere aus Ethylenoxid und Propylenoxid sind beispielsweise die Pluronic® PE oder Pluriol® RPE-Marken der BASF SE.

Die H-funktionellen Starterverbindungen können auch aus der Substanzklasse der Polyesterpolyole ausgewählt sein, insbesondere solchen mit einem Molekulargewicht Mn im Bereich von 200 bis 4500 g/mol. Als Polyesterpolyole werden mindestens difunktionelle Polyester eingesetzt. Bevorzugt bestehen Polyesterpolyole aus alternierenden Säure- und Alkoholeinheiten. Als Säurekomponenten werden z.B. Bernsteinsäure, Maleinsäure, Maleinsäureanhydrid, Adipinsäure, Phthalsäureanhydrid, Phthalsäure, Isophthalsäure, Terephthalsäure, Tetrahydrophtalsäure, Tetrahydrophthalsäureanhydrid, Hexahydrophthalsäureanhydrid oder Gemische aus den genannten Säuren und/oder Anhydride eingesetzt. Als Alkoholkomponenten werden z.B. Ethandiol, 1,2-Propandiol, 1,3-Propandiol, 1,4-Butandiol, 1,5-Pentandiol, Neopentylglykol, 1,6-Hexandiol, 1,4-Bis-(hydroxymethyl)-cyclohexan, Diethylenglykol, Dipropylenglykol, Trimethylolpropan, Glycerin, Pentaerythrit oder Gemische aus den genannten Alkoholen verwendet. Werden als Alkoholkomponente zweiwertige oder mehrwertige Polyetherpolyole eingesetzt, so erhält man Polyesteretherpolyole die ebenfalls als Starterverbindungen zur Herstellung der Polyethercarbonatpolyole dienen können. Bevorzugt werden Polyetherpolyole mit $M_n$ = 150 bis 2000 g/mol zur Herstellung der Polyesteretherpolyole eingesetzt.

Des Weiteren können als H-funktionelle Starterverbindungen Polycarbonatdiole eingesetzt werden, insbesondere solche mit einem Molekulargewicht $M_n$ im Bereich von 150 bis 4500 g/mol, vorzugsweise 500 bis 2500 g/mol, die beispielsweise durch Umsetzung von Phosgen, Dimethylcarbonat, Diethylcarbonat oder Diphenylcarbonat und difunktionellen Alkoholen oder Polyesterpolyolen oder Polyetherpolyolen hergestellt werden. Beispiele zu Polycarbonaten finden sich z.B. in der EP-A 1359177. Beispielsweise können als Polycarbonatdiole die Desmophen® C-Typen der Bayer MaterialScience AG verwendet werden, wie z.B. Desmophen® C 1100 oder Desmophen® C 2200.

In einer weiteren Ausführungsform der Erfindung können Polyethercarbonatpolyole als H-funktionelle Starterverbindungen eingesetzt werden. Insbesondere werden Polyethercarbonatpolyole, die nach dem hier beschriebenen erfindungsgemäßen Verfahren erhältlich sind, eingesetzt. Diese als H-funktionelle Starterverbindungen eingesetzten Polyethercarbonatpolyole werden hierzu in einem separaten Reaktionsschritt zuvor hergestellt.

Die H-funktionellen Starterverbindungen weisen im Allgemeinen eine OH-Funktionalität (d.h. Anzahl an für die Polymerisation aktiven H-Atomen pro Molekül) von 1 bis 8, bevorzugt von 2 bis 6 und besonders bevorzugt von 2 bis 4 auf. Die H-funktionellen Starterverbindungen werden entweder einzeln oder als Gemisch aus mindestens zwei H-funktionellen Starterverbindungen eingesetzt.

Bevorzugte H-funktionelle Starterverbindungen sind Alkohole der allgemeinen Formel

$$HO-(CH_2)_X-OH \qquad (III)$$

wobei x eine Zahl von 1 bis 20, bevorzugt eine ganze Zahl von 2 bis 20 ist. Beispiele für Alkohole gemäß obiger Formel sind Ethylenglycol, 1,4-Butandiol, 1,6-Hexandiol, 1,8-Octandiol, 1,10 Decandiol und 1,12-Dodecandiol. Weitere bevorzugte H-funktionelle Starterverbindungen sind Neopentylglykol, Trimethylolpropan, Glycerin, Pentaerythrit, Umsetzungsprodukte der Alkohole gemäß obiger Formel mit ε-Caprolacton, z.B. Umsetzungsprodukte von Trimethylolpropan mit ε-Caprolacton, Umsetzungsprodukte von Glycerin mit ε-Caprolacton, sowie Umsetzungsprodukte von Pentaerythrit mit ε-Caprolacton. Weiterhin bevorzugt werden als H-funktionelle Starterverbindungen Wasser, Diethylenglykol, Dipropylenglykol, Rizinusöl, Sorbit und Polyetherpolyole, aufgebaut aus sich wiederholenden Polyalkylenoxideinheiten, und Polyethercarbonatpolyole eingesetzt.

Besonders bevorzugt handelt es sich bei den H-funktionellen Starterverbindungen um eine oder mehrere Verbindungen ausgewählt aus der Gruppe bestehend aus Ethylenglykol, Propylenglykol, 1,3-Propandiol, 1,3-Butandiol, 1,4-Butandiol, 1,5-Pentandiol, 2-Methylpropan-1,3-diol, Neopentylglykol, 1,6-Hexandiol, Diethylenglykol, Dipropylenglykol, Glycerin, Trimethylolpropan, di- und trifunktionelle Polyetherpolyole, wobei das Polyetherpolyol aus einer di- oder tri-H-funktionellen Starterverbindung und Propylenoxid bzw. einer di- oder tri-H-funktionellen Starterverbindung, Propylenoxid und Ethylenoxid sowie di- und trifunktionelle Polyethercarbonatpolyole, wobei das Polyethercarbonatpolyol aus

einer di- oder tri-H-funktionellen Starterverbindung, Kohlendioxid und Propylenoxid und/oder Ethylenoxid aufgebaut ist. Die Polyetherpolyole und Polyethercarbonatpolyole haben bevorzugt eine OH-Funktionalität von 2 bis 4 und ein Molekulargewicht $M_n$ im Bereich von 62 bis 4500 g/mol und insbesondere ein Molekulargewicht $M_n$ im Bereich von 62 bis 3000 g/mol.

Die Suspensionsmittel, die in Schritt ($\alpha$) zum Suspendieren des Katalysators eingesetzt werden, enthalten keine H-funktionellen Gruppen. Als Suspensionsmittel sind alle polar-aprotischen, schwach polar-aprotischen und unpolar-aprotischen Lösungsmittel geeignet, die jeweils keine H-funktionellen Gruppen enthalten. Als Suspensionsmittel können auch eine Mischung aus zwei oder mehrerer dieser Suspensionsmittel eingesetzt werden. Beispielhaft seien an dieser Stelle folgende polar-aprotischen Lösungsmittel genannt: 4-Methyl-2-oxo-1,3-dioxolan (im Folgenden auch als cyclisches Propylencarbonat bezeichnet), 1,3-Dioxolan-2-on, Aceton, Methylethylketon, Acetonitril, Nitromethan, Dimethylsulfoxid, Sulfolan, Dimethylformamid, Dimethylacetamid und *N*-Methylpyrrolidon. Zu der Gruppe der unpolar- und schwach polar-aprotischen Lösungsmittel zählen z.B. Ether, wie z.B. Dioxan, Diethylether, Methyl-tert-Butylether und Tetrahydrofuran, Ester, wie z.B. Essigsäureethylester und Essigsäurebutylester, Kohlenwasserstoffe, wie z.B. Pentan, n-Hexan, Benzol und alkylierte Benzolderivate (z.B. Toluol, Xylol, Ethylbenzol) und chlorierte Kohlenwasserstoffe, wie z.B., Chloroform, Chlorbenzol, Dichlorbenzol und Tetrachlorkohlenstoff. Bevorzugt als Suspensionsmittel werden 4-Methyl-2-oxo-1,3-dioxolan, 1,3-Dioxolan-2-on, Toluol, Xylol, Ethylbenzol, Chlorbenzol und Dichlorbenzol sowie Mischungen zweier oder mehrerer dieser Suspensionsmittel eingesetzt, besonders bevorzugt ist 4-Methyl-2-oxo-1,3-dioxolan und 1,3-Dioxolan-2-on oder eine Mischung aus 4-Methyl-2-oxo-1,3-dioxolan und 1,3-Dioxolan-2-on.

In einer alternativen Ausführungsform werden als Suspensionsmittel, die in Schritt ($\alpha$) zum Suspendieren des Katalysators eingesetzt werden, eine oder mehrere Verbindung(en) ausgewählt aus der Gruppe bestehend aus aliphatischen Lactonen, aromatischen Lactonen, Lactiden, cyclischen Carbonaten mit mindestens drei gegebenenfalls substituierten Methylengruppen zwischen den Sauerstoffatomen der Carbonatgruppe, aliphatischen cyclischen Anhydriden und aromatischen cyclischen Anhydriden. Ohne an eine Theorie gebunden zu sein, werden solche Suspensionsmittel im späteren Verlauf der Polymerisationsverlauf in Gegenwart eines Starters in die Polymerkette eingebaut. Dadurch entfallen nachgelagerte Reinigungsschritte.

Aliphatische oder aromatische Lactone sind cyclische Verbindungen enthaltend eine Esterbindung im Ring. Bevorzugte Verbindungen sind 4-gliedrige Ringlactone wie $\beta$-Propiolacton, $\beta$-Butyrolacton, $\beta$-Isovalerolacton, $\beta$-Caprolacton, $\beta$-Isocaprolacton, $\beta$-Methyl-$\beta$-valerolacton, 5-gliedrige Ringlactone, wie $\gamma$-Butyrolacton, $\gamma$-Valerolacton, 5-Methylfuran-2(3H)-on, 5-Methylidenedihydrofuran-2(3H)-on, 5-Hydroxyfuran-2(5H)-on, 2-Benzofuran-1(3H)-on und 6-Methy-2-benzofuran-1(3H)-on, 6-gliedrige Ringlactone, wie $\delta$-Valerolacton, 1,4-Dioxan-2-on, Dihydrocumarin, 1H-Isochromen-1-on, 8H-pyrano[3,4-b]pyridine-8-on, 1,4-Dihydro-3H-isochromen-3-on, 7,8-Dihydro-5H-pyrano[4,3-b]pyridine-5-on, 4-Methyl-3,4-dihydro-1H-pyrano[3,4-b]pyridine-1-on, 6-Hydroxy-3,4-dihydro-1H-isochromen-1-on, 7-Hydroxy-3,4-dihydro-2H-chromen-2-on, 3-Ethyl-1H-isochromen-1-on, 3-(Hydroxymethyl)-1H-isochromen-1-on, 9-Hydroxy-1H,3H-benzo[de]isochromen-1-on, 6,7-Dimethoxy-1,4-dihydro-3H-isochromen-3-on und 3-Phenyl-3,4-dihydro-1H-isochromen-1-on, 7-gliedrige Ringlactone, wie $\varepsilon$-Caprolacton, 1,5-Dioxepan-2-on, 5-Methyloxepan-2-on, Oxepane-2,7-dion, thiepan-2-on, 5-Chlorooxepan-2-on, (4*S*)-4-(Propan-2-yl)oxepan-2-on, 7-Butyloxepan-2-on, 5-(4-Aminobuthyl)oxepan-2-on, 5-Phenyloxepan-2-on, 7-Hexyloxepan-2-on, (5*S*,7*S*)-5-Methyl-7-(propan-2-yl)oxepan-2-on, 4-Methyl-7-(propan-2-yl)oxepan-2-on, und höhergliedrige Ringlactone, wie (7E)-Oxacycloheptadec-7-en-2-on.

Lactide sind cyclische Verbindungen enthaltend zwei oder mehr Esterbindungen im Ring. Bevorzugte Verbindungen sind Glycolid (1,4-Dioxan-2,5-dion), L-Lactid (L-3,6-Dimethyl-1,4-dioxan-2,5-dion), D-Lactid, DL-Lactid, Mesolactid und 3-Methyl-1,4-dioxan-2,5-dion, 3-Hexyl-6-methyl-1,4-dioxane-2,5-dione, 3,6-Di(but-3-en-1-yl)-1,4-dioxane-2,5-dion (jeweils einschließlich optisch aktiver Formen). Besonders bevorzugt ist L-Lactid.

Als cyclische Carbonate werden vorzugsweise Verbindungen mit mindestens drei gegebenenfalls substituierten Methylengruppen zwischen den Sauerstoffatomen der Carbonatgruppe eingesetzt. Bevorzugte Verbindungen sind Trimethylencarbonat, Neopentylglykolcarbonat (5,5-Dimethyl-1,3-dioxan-2-on), 2,2,4-Trimethyl-1,3-pentandiolcarbonat, 2,2-Dimethyl-1,3-butandiolcarbonat, 1,3-Butandiolcarbonat, 2-Methyl-1,3-propandiolcarbonat, 2,4-Pentandiolcarbonat, 2-Methyl-butan-1,3-diolcarbonat, TMP-Monoallylethercarbonat, Pentaerythritdiallylethercarbonat, 5-(2-Hydroxyethyl)-1,3-dioxan-2-on, 5-[2-(Benzyloxy)ethyl]-1,3-dioxan-2-on, 4-Ethyl-1,3-dioxolan-2-on, 1,3-Dioxolan-2-on, 5-Ethyl-5-methyl-1,3-dioxan-2-on, 5,5-Diethyl-1,3-dioxan-2-on, 5-Methyl-5-propyl-1,3-dioxan-2-on, 5-(Phenylamino)-1,3-dioxan-2-on und 5,5-Dipropyl-1,3-dioxan-2-on. Besonders bevorzugt sind Trimethylencarbonat und Neopentylglykolcarbonat.

Cyclische Carbonate mit weniger als drei gegebenenfalls substituierten Methylengruppen zwischen den Sauerstoffatomen der Carbonatgruppe werden unter den Bedingungen des erfindungsgemäßen Verfahrens zur Copolymerisation von Epoxiden und $CO_2$ nicht oder nur zu einem geringen Anteil in die Polymerkette eingebaut.

Cyclische Carbonate mit weniger als drei gegebenenfalls substituierten Methylengruppen zwischen den Sauerstoffatomen der Carbonatgruppe können jedoch gemeinsam mit anderen Suspensionsmitteln eingesetzt werden. Bevorzugte cyclische Carbonate mit weniger als drei gegebenenfalls substituierten Methylengruppen zwischen den Sauerstoffatomen der Carbonatgruppe sind Ethylencarbonat, Propylencarbonat, 2,3-Butandiolcarbonat, 2,3-Pentandiolcarbonat, 2-Methyl-1,2-propandiolcarbonat, 2,3-Dimethyl-2,3-butandiolcarbonat.

Cyclische Anhydride sind cyclische Verbindungen enthaltend eine Anhydridgruppe im Ring eingesetzt. Bevorzugte Verbindungen sind Succinsäureanhydrid, Maleinsäureanhydrid, Phthalsäureanhydrid, 1,2-Cyclohexandicarbonsäureanhydrid, Diphensäureanhydrid, Tetrahydrophthalsäureanhydrid, Methyltetrahydrophthalsäureanhydrid, Norbornendisäureanhydrid und ihre Chlorierungsprodukte, Bernsteinsäureanhydrid, Glutarsäureanhydrid, Diglykolsäureanhydrid, 1,8-Naphthalsäureanhydrid, Bernsteinsäureanhydrid, Dodecenylbernsteinsäureanhydrid, Tetradecenylbernsteinsäureanhydrid, Hexadecenylbernsteinsäureanhydrid, Octadecenylbernsteinsäureanhydrid, 3- und 4-Nitrophthalsäureanhydrid, Tetrachlorphthalsäureanhydrid, Tetrabromphthalsäureanhydrid, Itaconsäureanhydrid, Dimethylmaleinsäureanhydrid, Allylnorbornendisäureanhydrid, 3-Methylfuran-2,5-dion, 3-Methyldihydrofuran-2,5-dion, Dihydro-2H-pyran-2,6(3H)-dion, 1,4-Dioxane-2,6-dion, 2H-Pyran-2,4,6(3H,5H)-trion, 3-Ethyldihydrofuran-2,5-dion, 3-Methoxydihydrofuran-2,5-dion, 3-(Prop-2-en-1-yl)dihydrofuran-2,5-dion, N-(2,5-Dioxotetrahydrofuran-3-yl)formamid und 3[(2E)-But-2-en-1-yl]dihydrofuran-2,5-dion. Besonders bevorzugt sind Succinsäureanhydrid, Maleinsäureanhydrid und Phthalsäureanhydrid.

Als Katalysator für die Herstellung der erfindungsgemäßen höherfunktionellen Polyethercarbonatpolyole wird vorzugsweise ein DMC-Katalysator (Doppel-Metall-Cyanid-Katalysator) eingesetzt. Es können zusätzlich zu dem DMC-Katalysator auch Zinkglutarat oder ein homogener Katalysator, wie ein Kobalt-Salen-Komplex eingesetzt werden. Eine Übersicht über die bekannten homogenen Katalysatoren für die Copolymerisation von Alkylenoxiden und $CO_2$ gibt zum Beispiel Chemical Communications 47(2011)141-163.

Die in dem erfindungsgemäßen Verfahren bevorzugt einsetzbaren DMC-Katalysatoren enthaltenen Doppelmetallcyanid-Verbindungen sind die Reaktionsprodukte wasserlöslicher Metallsalze und wasserlöslicher Metallcyanidsalze.

Doppelmetallcyanid (DMC)-Katalysatoren sind aus dem Stand der Technik zur Homopolymerisation von Alkylenoxiden bekannt (siehe z.B. US-A 3 404 109, US-A 3 829 505, US-A 3 941 849 und US-A 5 158 922). DMC-Katalysatoren, die z.B. in US-A 5 470 813, EP-A 700 949, EP-A 743 093, EP A 761 708, WO 97/40086 A1, WO 98/16310 A1 und WO 00/47649 A1 beschrieben sind, besitzen eine sehr hohe Aktivität und ermöglichen die Herstellung von Polyethercarbonatpolyolen bei sehr geringen Katalysatorkonzentrationen, so dass eine Abtrennung des Katalysators aus dem fertigen Produkt i.a. nicht mehr erforderlich ist.. Ein typisches Beispiel sind die in EP-A 700 949 beschriebenen hochaktiven DMC-Katalysatoren, die neben einer Doppelmetallcyanid-Verbindung (z.B. Zinkhexacyanocobaltat(III)) und einem organischen Komplexliganden (z.B. tert-Butanol) noch einen Polyether mit einem zahlenmittleren Molekulargewicht größer als 500 g/mol enthalten.

Die erfindungsgemäß einsetzbaren DMC-Katalysatoren werden vorzugsweise erhalten, indem man (a) im ersten Schritt eine wässrige Lösung eines Metallsalzes mit der wässrigen Lösung eines Metallcyanidsalzes in Gegenwart eines oder mehrerer organischer Komplexliganden, z.B. eines Ethers oder Alkohols, umsetzt,

(b) wobei im zweiten Schritt der Feststoff aus der aus (a) erhaltenen Suspension durch bekannte Techniken (wie Zentrifugation oder Filtration) abgetrennt wird,

(c) wobei gegebenenfalls in einem dritten Schritt der isolierte Feststoff mit einer wässrigen Lösung eines organischen Komplexliganden gewaschen wird (z.B. durch Resuspendieren und anschließende erneute Isolierung durch Filtration oder Zentrifugation),

(d) wobei anschließend der erhaltene Feststoff, gegebenenfalls nach Pulverisierung, bei Temperaturen von im allgemeinen 20 - 120°C und bei Drücken von im Allgemeinen 0,1 mbar bis Normaldruck (1013 mbar) getrocknet wird,

und wobei im ersten Schritt oder unmittelbar nach der Ausfällung der

Doppelmetallcyanidverbindung (zweiter Schritt) ein oder mehrere organische Komplexliganden, vorzugsweise im Überschuss (bezogen auf die Doppelmetallcyanidverbindung) und gegebenenfalls weitere komplexbildende Komponenten zugesetzt werden.

Beispielsweise wird eine wässrige Zinkchlorid-Lösung (bevorzugt im Überschuss bezogen auf das Metallcyanidsalz) und Kaliumhexacyanocobaltat gemischt und anschließend Dimethoxyethan (Glyme) oder tert-Butanol (vorzugsweise im Überschuss, bezogen auf Zinkhexacyanocobaltat) zur gebildeten Suspension gegeben.

Zur Herstellung der Doppelmetallcyanid-Verbindungen geeignete Metallsalze weisen bevorzugt eine Zusammensetzung nach der allgemeinen Formel (IV) auf,

$$M(X)_n \qquad (IV)$$

wobei

M ausgewählt ist aus den Metallkationen $Zn^{2+}$, $Fe^{2+}$, $Ni^{2+}$, $Mn^{2+}$, $Co^{2+}$, $Sr^{2+}$, $Sn^{2+}$, $Pb^{2+}$ und, $Cu^{2+}$, bevorzugt ist M $Zu^{2+}$, $Fe^{2+}$, $Co^{2+}$ oder $Ni^{2+}$,

X sind ein oder mehrere (d.h. verschiedene) Anionen, vorzugsweise ein Anion ausgewählt aus der Gruppe der

Halogenide (d.h. Fluorid, Chlorid, Bromid, Iodid), Hydroxid, Sulfat, Carbonat, Cyanat, Thiocyanat, Isocyanat, Isothiocyanat, Carboxylat, Oxalat und Nitrat;
n ist 1, wenn X = Sulfat, Carbonat oder Oxalat ist und
n ist 2, wenn X = Halogenid, Hydroxid, Carboxylat, Cyanat, Thiocyanat, Isocyanat, Isothiocyanat oder Nitrat ist,
oder geeignete Metallsalze weisen eine Zusammensetzung nach der allgemeinen Formel (V) auf,

$$M_r(X)_3 \qquad (V)$$

wobei

M ausgewählt ist aus den Metallkationen $Fe^{3+}$, $Al^{3+}$, $Co^{3+}$ und $Cr^{3+}$,
X sind ein oder mehrere (d.h. verschiedene) Anionen, vorzugsweise ein Anion ausgewählt aus der Gruppe der Halogenide (d.h. Fluorid, Chlorid, Bromid, Iodid), Hydroxid, Sulfat, Carbonat, Cyanat, Thiocyanat, Isocyanat, Isothiocyanat, Carboxylat, Oxalat und Nitrat;
r ist 2, wenn X = Sulfat, Carbonat oder Oxalat ist und
r ist 1, wenn X = Halogenid, Hydroxid, Carboxylat, Cyanat, Thiocyanat, Isocyanat, Isothiocyanat oder Nitrat ist,
oder geeignete Metallsalze weisen eine Zusammensetzung nach der allgemeinen Formel (VI) auf,

$$M(X)_s \qquad (VI)$$

wobei

M ausgewählt ist aus den Metallkationen $Mo^{4+}$, $V^{4+}$ und $W^{4+}$
X sind ein oder mehrere (d.h. verschiedene) Anionen, vorzugsweise ein Anion ausgewählt aus der Gruppe der Halogenide (d.h. Fluorid, Chlorid, Bromid, Iodid), Hydroxid, Sulfat, Carbonat, Cyanat, Thiocyanat, Isocyanat, Isothiocyanat, Carboxylat, Oxalat und Nitrat;
s ist 2, wenn X = Sulfat, Carbonat oder Oxalat ist und
s ist 4, wenn X = Halogenid, Hydroxid, Carboxylat, Cyanat, Thiocyanat, Isocyanat, Isothiocyanat oder Nitrat ist,
oder geeignete Metallsalze weisen eine Zusammensetzung nach der allgemeinen Formel (VII) auf,

$$M(X)_t \qquad (VII)$$

wobei

M ausgewählt ist aus den Metallkationen $Mo^{6+}$ und $W^{6+}$
X sind ein oder mehrere (d.h. verschiedene) Anionen, vorzugsweise ein Anion ausgewählt aus der Gruppe der Halogenide (d.h. Fluorid, Chlorid, Bromid, Iodid), Hydroxid, Sulfat, Carbonat, Cyanat, Thiocyanat, Isocyanat, Isothiocyanat, Carboxylat, Oxalat und Nitrat;
t ist 3, wenn X = Sulfat, Carbonat oder Oxalat ist und
t ist 6, wenn X = Halogenid, Hydroxid, Carboxylat, Cyanat, Thiocyanat, Isocyanat, Isothiocyanat oder Nitrat ist.

Beispiele geeigneter Metallsalze sind Zinkchlorid, Zinkbromid, Zinkjodid, Zinkacetat, Zinkacetylacetonat, Zinkbenzoat, Zinknitrat, Eisen(II)sulfat, Eisen(II)bromid, Eisen(II)chlorid, Eisen(III)chlorid, Cobalt(II)chlorid, Cobalt(II)thiocyanat, Nickel(II)chlorid und Nickel(II)nitrat. Es können auch Mischungen verschiedener Metallsalze eingesetzt werden.
Zur Herstellung der Doppelmetallcyanid-Verbindungen geeignete Metallcyanidsalze weisen bevorzugt eine Zusammensetzung nach der allgemeinen Formel (VIII) auf,

$$(Y)_aM'(CN)_b(A)_c \qquad (VIII)$$

wobei
M' ausgewählt ist aus einem oder mehreren Metallkationen der Gruppe bestehend aus Fe(II), Fe(III), Co(II), Co(III), Cr(II), Cr(III), Mn(II), Mn(III), Ir(III), Ni(II), Rh(III), Ru(II), V(IV) und V(V), bevorzugt ist M' ein oder mehrere Metallkationen der Gruppe bestehend aus Co(II), Co(III), Fe(II), Fe(III), Cr(III), Ir(III) und Ni(II), Y ausgewählt ist aus einem oder mehreren Metallkationen der Gruppe bestehend aus Alkalimetall (d.h. $Li^+$, $Na^+$, $K^+$, $Rb^+$) und Erdalkalimetall (d.h. $Be^{2+}$, $Mg^{2+}$, $Ca^{2+}$, $Sr^{2+}$, $Ba^{2+}$), A ausgewählt ist aus einem oder mehreren Anionen der Gruppe bestehend aus Halogenide (d.h. Fluorid, Chlorid, Bromid, Iodid), Hydroxid, Sulfat, Carbonat, Cyanat, Thiocyanat, Isocyanat, Isothiocyanat, Carboxylat,

Azid, Oxalat oder Nitrat und a, b und c ganzzahlige Zahlen sind, wobei die Werte für a, b und c so gewählt sind, dass die Elektroneutralität des Metallcyanidsalzes gegeben ist; a ist vorzugsweise 1, 2, 3 oder 4; b ist vorzugsweise 4, 5 oder 6; c besitzt bevorzugt den Wert 0.

Beispiele geeigneter Metallcyanidsalze sind Natriumhexacyanocobaltat(III), Kaliumhexacyanocobaltat(III), Kaliumhexacyanoferrat(II), Kaliumhexacyanoferrat(III), Calciumhexacyanocobaltat(III) und Lithiumhexacyanocobaltat(III).

Bevorzugte Doppelmetallcyanid-Verbindungen, die in den erfindungsgemäß einsetzbaren DMC-Katalysatoren enthalten sind, sind Verbindungen mit einer Zusammensetzung nach der allgemeinen Formel (IX),

$$M_x[M'_{x'},(CN)_y]_z \qquad (IX)$$

worin M wie in Formel (IV) bis (VII) und
M' wie in Formel (IIX) definiert ist, und
x, x', y und z sind ganzzahlig und so gewählt, dass die Elektronenneutralität der Doppelmetallcyanidverbindung gegeben ist.
Vorzugsweise ist
x = 3, x' = 1, y = 6 und z = 2,
M = Zn(II), Fe(II), Co(II) oder Ni(II) und
M' = Co(III), Fe(III), Cr(III) oder Ir(III).

Beispiele geeigneter Doppelmetallcyanidverbindungen a) sind Zinkhexacyanocobaltat(III), Zinkhexacyanoiridat(III), Zinkhexacyanoferrat(III) und Cobalt(II)hexacyanocobaltat(III). Weitere Beispiele geeigneter Doppelmetallcyanid-Verbindungen sind z.B. US 5 158 922 (Spalte 8, Zeilen 29 - 66) zu entnehmen. Besonders bevorzugt verwendet wird Zinkhexacyanocobaltat(III).

Die bei der Herstellung der DMC-Katalysatoren zugesetzten organischen Komplexliganden sind beispielsweise in US 5 158 922 (siehe insbesondere Spalte 6, Zeilen 9 bis 65), US 3 404 109, US 3 829 505, US 3 941 849, EP-A 700 949, EP-A 761 708, JP 4 145 123, US 5 470 813, EP-A 743 093 und WO-A 97/40086) offenbart. Beispielsweise werden als organische Komplexliganden wasserlösliche, organische Verbindungen mit Heteroatomen, wie Sauerstoff, Stickstoff, Phosphor oder Schwefel, die mit der Doppelmetallcyanid-Verbindung Komplexe bilden können, eingesetzt. Bevorzugte organische Komplexliganden sind Alkohole, Aldehyde, Ketone, Ether, Ester, Amide, Harnstoffe, Nitrile, Sulfide und deren Mischungen. Besonders bevorzugte organische Komplexliganden sind aliphatische Ether (wie Dimethoxyethan), wasserlösliche aliphatische Alkohole (wie Ethanol, Isopropanol, n-Butanol, iso-Butanol, sek.-Butanol, *tert*-Butanol, 2-Methyl-3-buten-2-ol und 2-Methyl-3-butin-2-ol), Verbindungen, die sowohl aliphatische oder cycloaliphatische Ethergruppen wie auch aliphatische Hydroxylgruppen enthalten (wie z.B. Ethylenglykol-mono-*tert*-butylether, Diethylenglykol-mono-*tert*-butylether, Tripropylenglykol-mono-methylether und 3-Methyl-3-oxetan-methanol). Höchst bevorzugte organische Komplexliganden sind ausgewählt aus einer oder mehrerer Verbindungen der Gruppe bestehend aus Dimethoxyethan, *tert*-Butanol 2-Methyl-3-buten-2-ol, 2-Methyl-3-butin-2-ol, Ethylenglykol-mono-*tert*-butylether und 3-Methyl-3-oxetan-methanol.

Optional werden in der Herstellung der erfindungsgemäß einsetzbaren DMC-Katalysatoren eine oder mehrere komplexbildende Komponente(n) aus den Verbindungsklassen der Polyether, Polyester, Polycarbonate, Polyalkylenglykolsorbitanester, Polyalkylenglykolglycidylether, Polyacrylamid, Poly(acrylamid-co-acrylsäure), Polyacrylsäure, Poly (acrylsäure-co-maleinsäure), Polyacrylnitril, Polyalkylacrylate, Polyalkylmethacrylate, Polyvinylmethylether, Polyvinylethylether, Polyvinylacetat, Polyvinylalkohol, Poly-N-vinylpyrrolidon, Poly(N-vinylpyrrolidon-co-acrylsäure), Polyvinylmethylketon, Poly(4-vinylphenol), Poly(acrylsäure-co-styrol), Oxazolinpolymere, Polyalkylenimine, Maleinsäure- und Maleinsäureanhydridcopolymere, Hydroxyethylcellulose und Polyacetale, oder der Glycidylether, Glycoside, Carbonsäureester mehrwertiger Alkohole, Gallensäuren oder deren Salze, Ester oder Amide, Cyclodextrine, Phosphorverbindungen, $\alpha,\beta$-ungesättigten Carbonsäureester oder ionische Oberflächen- bzw. grenzflächenaktiven Verbindungen eingesetzt.

Bevorzugt werden bei der Herstellung der erfindungsgemäß einsetzbaren DMC-Katalysatoren die wässrigen Lösungen des Metallsalzes (z.B. Zinkchlorid) im ersten Schritt im stöchiometrischen Überschuss (mindestens 50 Mol-%) bezogen auf das Metallcyanidsalz eingesetzt. Dies entspricht mindestens einem molaren Verhältnis von Metallsalz zu Metallcyanidsalz von 2,25 zu 1,00. Das Metallcyanidsalz (z.B. Kaliumhexacyanocobaltat) wird in Gegenwart des organischen Komplexliganden (z.B. *tert*-Butanol) umgesetzt, wobei sich eine Suspension bildet, die die Doppelmetallcyanid-Verbindung (z.B. Zinkhexacyanocobaltat), Wasser, überschüssiges Metallsalz, und den organischen Komplexliganden enthält.

Der organische Komplexligand kann dabei in der wässrigen Lösung des Metallsalzes und/oder des Metallcyanidsalzes vorhanden sein, oder er wird der nach Ausfällung der Doppelmetallcyanid-Verbindung erhaltenen Suspension unmittelbar zugegeben. Es hat sich als vorteilhaft erwiesen, die wässrigen Lösungen des Metallsalzes und des Metallcyanidsalzes, und den organischen Komplexliganden unter starkem Rühren zu vermischen. Optional wird die im ersten Schritt gebildete Suspension anschließend mit einer weiteren komplexbildenden Komponente behandelt. Die komplexbildende Komponente wird dabei bevorzugt in einer Mischung mit Wasser und organischem Komplexliganden eingesetzt. Ein bevorzugtes Verfahren zur Durchführung des ersten Schrittes (d.h. der Herstellung der Suspension) erfolgt unter Einsatz einer Mischdüse, besonders bevorzugt unter Einsatz eines Strahldispergators, wie beispielsweise in WO-A 01/39883 beschrieben.

Im zweiten Schritt erfolgt die Isolierung des Feststoffs (d.h. die Vorstufe des erfindungsgemäßen Katalysators) aus der Suspension durch bekannte Techniken, wie Zentrifugation oder Filtration.

In einer bevorzugten Ausführungsvariante wird der isolierte Feststoff anschließend in einem dritten Verfahrensschritt mit einer wässrigen Lösung des organischen Komplexliganden gewaschen (z.B. durch Resuspendieren und anschließende erneute Isolierung durch Filtration oder Zentrifugation). Auf diese Weise können zum Beispiel wasserlösliche Nebenprodukte, wie Kaliumchlorid, aus dem erfindungsgemäßen Katalysator entfernt werden. Bevorzugt liegt die Menge des organischen Komplexliganden in der wässrigen Waschlösung zwischen 40 und 80 Gew.%, bezogen auf die Gesamtlösung.

Optional wird im dritten Schritt der wässrigen Waschlösung eine weitere komplexbildende Komponente, bevorzugt im Bereich zwischen 0,5 und 5 Gew.%, bezogen auf die Gesamtlösung, zugefügt.

Außerdem ist es vorteilhaft, den isolierten Feststoff mehr als einmal zu waschen. Vorzugsweise wird in einem ersten Waschschritt (c-1) mit einer wässrigen Lösung des ungesättigten Alkohols gewaschen (z.B. durch Resuspendieren und anschließende erneute Isolierung durch Filtration oder Zentrifugation), um auf diese Weise zum Beispiel wasserlösliche Nebenprodukte, wie Kaliumchlorid, aus dem erfindungsgemäßen Katalysator zu entfernen. Besonders bevorzugt liegt die Menge des ungesättigten Alkohols in der wässrigen Waschlösung zwischen 40 und 80 Gew.%, bezogen auf die Gesamtlösung des ersten Waschschritts. In den weiteren Waschschritten (c-2) wird entweder der erste Waschschritt einmal oder mehrmals, vorzugsweise einmal bis dreimal wiederholt, oder vorzugsweise wird eine nicht-wässrige Lösung, wie z.B. eine Mischung oder Lösung aus ungesättigtem Alkohol und weiterer komplexbildender Komponente (bevorzugt im Bereich zwischen 0,5 und 5 Gew.%, bezogen auf die Gesamtmenge der Waschlösung des Schrittes (c-2)), als Waschlösung eingesetzt und der Feststoff damit einmal oder mehrmals, vorzugsweise einmal bis dreimal gewaschen.

Der isolierte und gegebenenfalls gewaschene Feststoff wird anschließend, gegebenenfalls nach Pulverisierung, bei Temperaturen von 20 - 100°C und bei Drücken von 0,1 mbar bis Normaldruck (1013 mbar) getrocknet.

Ein besonders bevorzugtes Verfahren zur Isolierung der erfindungsgemäßen DMC-Katalysatoren aus der Suspension durch Filtration, Filterkuchenwäsche und Trocknung wird zum Beispiel in der WO-A 01/80994 beschrieben.

<u>Zu den einzelnen Verfahrensschritten:</u>

<u>Zu Schritt (α):</u>

Der DMC-Katalysator wird vorzugsweise in einer Menge eingesetzt, so dass der Gehalt an DMC-Katalysator im resultierenden Polyethercarbonatpolyol 10 bis 10000 ppm, besonders bevorzugt 20 bis 5000 ppm und höchst bevorzugt 50 bis 500 ppm beträgt. Der DMC-Katalysator kann in fester Form oder als Suspension in einem Suspensionsmittel, das keine H-funktionellen Gruppen enthält oder einer H-funktionellen Starterverbindung zugegeben werden. Während des Schrittes (α) kann durch den Reaktor bei einer Temperatur von 50 bis 200°C, bevorzugt von 80 bis 160°C, besonders bevorzugt von 125 bis 135°C ein Inertgas (beispielsweise Stickstoff oder ein Edelgas wie Argon), ein Inertgas-Kohlendioxid-Gemisch oder Kohlendioxid geleitet und gleichzeitig durch Entfernen des Inertgases oder Kohlendioxid (beispielsweise mit einer Pumpe) ein reduzierter Druck (absolut) von 10 mbar bis 800 mbar, bevorzugt von 40 mbar bis 200 mbar im Reaktor eingestellt werden.

<u>Zu Schritt (β):</u>

In einer bevorzugten Ausführungsform beträgt die bei der Aktivierung in Schritt (β) eingesetzte Menge von einem oder mehreren Alkylenoxiden 0,1 bis 25,0 Gew.-%, bevorzugt 1,0 bis 20,0 Gew.-%, besonders bevorzugt 5 bis 16,0 Gew.-% (bezogen auf die im Schritt (α) eingesetzte Menge an H-funktioneller Starterverbindung). Das Alkylenoxid kann kontinuierlich über einen längeren Zeitraum in den Reaktor dosiert, in einem Schritt oder schrittweise in mehreren Teilmengen zugegeben werden. Der DMC-Katalysator wird vorzugsweise in einer Menge eingesetzt, so dass der Gehalt an DMC-Katalysator im resultierenden Polyethercarbonatpolyol 10 bis 10000 ppm, besonders bevorzugt 20 bis 5000 ppm und höchst bevorzugt 20 bis 500 ppm beträgt.

<u>Zu Schritt (γ):</u>

Die Verzweigermoleküle können in einem Lösungsmittel oder in Alkylenoxid gelöst zugegeben werden, wobei

deren Konzentration 1 bis 50 Gew.-%, vorzugsweise 5 bis 20 Gew.-%, besonders bevorzugt 5 bis 15 Gew.-% beträgt. Als Lösungsmittel sind alle polar-aprotischen, schwach polar-aprotischen und unpolar-aprotischen Lösungsmittel geeignet, in denen die Verzweigermoleküle löslich sind. Beispielhaft seien an dieser Stelle folgende Lösungsmittel genannt: 4-Methyl-2-oxo-1,3-dioxolan, 1,3-Dioxolan-2-on, Toluol, Xylol, Ethylbenzol, Chlorbenzol und Dichlorbenzol sowie Mischungen zweier oder mehrerer dieser Suspensionsmittel. Die Zugabe der Verzweigermoleküle kann während beliebiger Zeiten oder während der gesamten Zeit der Alkylenoxid-Zugabe erfolgen. In einer alternativen Ausführungsform können die Verzweigermoleküle in Reinsubstanz zugegeben werden, während parallel die Alkylenoxide separat dosiert werden.

Zu den Schritten (γ) und (δ):

Die in den Schritten (γ) und (δ) eingesetzten Alkylenoxide können gleich oder verschieden von den im Schritt (β) eingesetzten Alkylenoxiden sein. Die in den Schritten (γ) und (δ) eingesetzten Alkylenoxide können gleich oder verschieden sein.

Das Verfahren zur Herstellung von Polyethercarbonatpolyolen aus Alkylenoxiden, Verzweigermolekülen, einer H-funktionellen Starterverbindung und Kohlendioxid in Gegenwart eines DMC-Katalysators kann kontinuierlich, im semibatch Verfahren oder diskontinuierlich durchgeführt werden.

Die vier Schritte α, β, γ und δ können in demselben Reaktor oder jeweils separat in unterschiedlichen Reaktoren durchgeführt werden. Besonders bevorzugte Reaktortypen sind Rührkessel, Rohrreaktor und Schlaufenreaktor. Werden die Reaktionsschritte α, β und γ in unterschiedlichen Reaktoren durchgeführt, kann für jeden Schritt ein unterschiedlicher Reaktortyp verwenden werden.

Polyethercarbonatpolyole können in einem Rührkessel hergestellt werden, wobei der Rührkessel je nach Ausführungsform und Betriebsweise über den Reaktormantel, innen liegende und/oder in einem Umpumpkreislauf befindliche Kühlflächen gekühlt wird. Sowohl in der semi-batch Anwendung, bei der das Produkt erst nach Ende der Reaktion entnommen wird, als auch in der kontinuierlichen Anwendung, bei der das Produkt kontinuierlich entnommen wird, ist besonders auf die Dosiergeschwindigkeit des Alkylenoxides zu achten. Sie ist so einzustellen, dass trotz der inhibierenden Wirkung des Kohlendioxids die Alkylenoxide genügend schnell abreagieren. Die Konzentration an freien Alkylenoxiden in der Reaktionsmischung während des Aktivierungsschrittes (Schritt (β)) beträgt vorzugsweise > 0 bis 100 Gew.-%, besonders bevorzugt > 0 bis 50 Gew-%, höchst bevorzugt > 0 bis 20 Gew.-% (jeweils bezogen auf das Gewicht der Reaktionsmischung). Die Konzentration an freien Alkylenoxiden in der Reaktionsmischung während der Copolymerisation (Schritte (γ) und (δ)) beträgt vorzugsweise > 0 bis 40 Gew.-%, besonders bevorzugt > 0 bis 25 Gew-%, höchst bevorzugt > 0 bis 15 Gew.-% (jeweils bezogen auf das Gewicht der Reaktionsmischung).

Eine weitere mögliche Ausführungsform der Erfindung für die Copolymerisation (Schritte (γ) und (δ)) ist dadurch gekennzeichnet, dass eine oder mehrere H-funktionelle Starterverbindungen während der Reaktion kontinuierlich in den Reaktor zudosiert werden. Bei einer Durchführung des Verfahrens im semi-batch Betrieb beträgt die Menge der H-funktionellen Starterverbindungen, die während der Reaktion kontinuierlich in den Reaktor zudosiert werden, bevorzugt mindestens 20 mol% Äquivalente, besonders bevorzugt 70 bis 95 mol% Äquivalente (jeweils bezogen auf die gesamte Menge an H-funktionellen Starterverbindungen). Bei einer kontinuierlichen Durchführung des Verfahrens beträgt die Menge der H-funktionellen Starterverbindungen, die während der Reaktion kontinuierlich in den Reaktor zudosiert werden, bevorzugt mindestens 80 mol% Äquivalente, besonders bevorzugt 95 bis 100 mol% Äquivalente (jeweils bezogen auf die gesamte Menge an H-funktionellen Starterverbindungen).

In einer bevorzugten Ausführungsform wird die gemäß der Schritte (α) und (β) aktivierte Katalysator-Starter-Mischung in demselben Reaktor weiter mit Alkylenoxiden, Verzweigermolekülen und Kohlendioxid umgesetzt.

In einer weiteren bevorzugten Ausführungsform wird die gemäß der Schritte (α) und (β) aktivierte Katalysator-Starter-Mischung in einem anderen Reaktionsbehältnis (beispielsweise einem Rührkessel, Rohrreaktor oder Schlaufenreaktor) weiter mit Alkylenoxiden, Verzweigermolekülen und Kohlendioxid umgesetzt.

In einer weiteren bevorzugten Ausführungsform wird die gemäß dem Schritt (α) getrocknete Katalysator-Starter-Mischung in einem anderen Reaktionsbehältnis (beispielsweise einem Rührkessel, Rohrreaktor oder Schlaufenreaktor) gemäß den Schritten (β) und (γ) mit Alkylenoxiden, Verzweigermolekülen und Kohlendioxid umgesetzt.

Bei der Reaktionsführung in einem Rohrreaktor werden die gemäß dem Schritt (α) getrocknete Katalysator-Starter-Mischung oder die gemäß den Schritten (α) und (β) aktivierte Katalysator-Starter-Mischung und gegebenenfalls weiterer Starter sowie Alkylenoxide, Verzweigermoleküle und Kohlendioxid kontinuierlich durch ein Rohr gepumpt. Bei Verwendung einer gemäß dem Schritt α getrockneten Katalysator-Starter-Mischung erfolgt die Aktivierung gemäß Schritt (β) im ersten Teil des Rohrreaktors und die Copolymerisation gemäß Schritt (β) im zweiten Teil des Rohrreaktors. Die molaren Verhältnisse der Reaktionspartner variieren je nach gewünschtem Polymer. In einer bevorzugten Ausführungsform wird hierbei Kohlendioxid in seiner flüssigen oder überkritischen Form zudosiert, um eine optimale Mischbarkeit der Komponenten zu ermöglichen. Das Kohlendioxid kann am Eingang des Reaktors und/oder über Dosierstellen, die entlang dem Reaktor angeordnet sind, in dem Reaktor eingebracht werden. Eine Teilmenge des Alkylenoxides kann am Eingang des Reaktors eingebracht werden. Die Restmenge des Alkylenoxides wird bevorzugt über mehrere Dosierstellen, die entlang des Reaktors angeordnet sind, in den Reaktor eingebracht. Vorteilhafterweise werden Mischelemente zur besseren Durchmischung der Reaktionspartner eingebaut, wie sie zum Beispiel von der Firma Ehrfeld Mikrotechnik BTS GmbH vertrieben werden, oder Mischer-Wärmetauscherelemente, die gleichzeitig die Durchmischung und Wärmeabfuhr verbessern. Bevorzugt wird durch die Mischelemente zudosiertes $CO_2$ und/oder Alkylenoxid mit der Reaktionsmischung vermischt. In einer alternativen Ausführungsform werden verschiedene Volumenelemente der Reaktionsmischung miteinander vermischt.

Schlaufenreaktoren können ebenfalls zur Herstellung von Polyethercarbonatpolyolen verwendet werden. Hierunter fallen im Allgemeinen Reaktoren mit interner und/oder externer Stoffrückführung (ggf. mit im Kreislauf angeordneten Wärmetauscherflächen), wie beispielsweise ein Strahlschlaufenreaktor, Jet-Loop Reaktor oder Venturi-Loop Reaktor, der auch kontinuierlich betrieben werden kann, oder ein schlaufenförmig ausgelegter Rohrreaktor mit geeigneten Vorrichtungen für die Umwälzung der Reaktionsmischung oder eine Schlaufe von mehreren, hintereinander geschalteten Rohrreaktoren oder mehreren hintereinander geschalteten Rührkesseln.

Um einen vollständigen Eduktumsatz zu realisieren, kann dem Reaktionsapparat, in dem die Schritte ($\gamma$) und ($\delta$) durchgeführt werden, ein weiterer Kessel oder ein Rohr ("Verweilrohr") nachgeschaltet werden, in dem nach der Reaktion vorhandene Restkonzentrationen freier Alkylenoxide abreagieren. Bevorzugt liegt der Druck in diesem nachgeschalteten Reaktor bei demselben Druck wie in dem Reaktionsapparat, in dem die Reaktionsschritte ($\gamma$) und ($\delta$) durchgeführt werden. Der Druck in dem nachgeschalteten Reaktor kann jedoch auch höher oder niedriger gewählt werden. In einer weiteren bevorzugten Ausführungsform wird das Kohlendioxid nach dem Reaktionsschritt ($\gamma$) und/oder ($\delta$) ganz oder teilweise abgelassen und der nachgeschaltete Reaktor bei Normaldruck oder einem geringen Überdruck betrieben. Die Temperatur in dem nachgeschalteten Reaktor kann bevorzugt bei 10 bis 150°C und bevorzugt bei 20 bis 100°C liegen. Das Reaktionsgemisch enthält am Ende des nachgeschalteten Reaktors vorzugsweise weniger als 0,05 Gew.-% Alkylenoxid.

Vorzugsweise wird ein Überschuss an Kohlendioxid bezogen auf die berechnete Menge an eingebautem Kohlendioxid im Polyethercarbonatpolyol eingesetzt, da bedingt durch die Reaktionsträgheit des Kohlendioxids ein Überschuss von Vorteil ist. Die Kohlendioxid-Menge kann über den Gesamtdruck bei den jeweiligen Reaktionsbedingungen festgelegt werden. Als Gesamtdruck (absolut) hat sich der Bereich von 0,01 bis 120 bar, bevorzugt 0,1 bis 110 bar, besonders bevorzugt von 1 bis 100 bar für die Copolymerisation zur Herstellung der höherfunktionellen Polyethercarbonatpolyole als vorteilhaft erwiesen. Es ist möglich, das Kohlendioxid kontinuierlich oder diskontinuierlich zuzuführen. Dies hängt davon ab, wie schnell die Alkylenoxide und das $CO_2$ verbraucht werden und ob das Produkt gegebenenfalls $CO_2$-freie Polyether-Blöcke oder Blöcke mit unterschiedlichem $CO_2$-Gehalt enthalten soll. Die Menge des Kohlendioxids (angegeben als Druck) kann bei der Zugabe der Alkylenoxide ebenso variieren. Je nach gewählten Reaktionsbedingungen ist es möglich, das $CO_2$ im gasförmigen, flüssigen oder überkritischen Zustand in den Reaktor einzuleiten. $CO_2$ kann auch als Feststoff in den Reaktor gegeben werden und dann unter den gewählten Reaktionsbedingungen in den gasförmigen, gelösten, flüssigen und/oder überkritischen Zustand übergehen.

In einer weiteren erfindungsgemäßen Verfahrensvariante kann der DMC-Katalysator aus der Gruppe umfassend $M_x[M'_{x'},(CN)_y]_z$ ausgewählt sein, wobei gilt: M = Zn(II), Fe(II), Co(II) oder Ni(II), M' = Co(III), Fe(III), Cr(III) oder Ir(III); und x = 3, x' = 1, y = 6 und z = 2. Diese Katalysatoren haben sich bei der Umsetzung von Kohlendioxid, monofunktionellen Alkylenoxiden und Verzweigermolekülen als besonders robust, zuverlässig, selektiv und prozessökonomisch erwiesen. Sie erlauben hohe und vollständige Umsetzungen der einzelnen Monomertypen im Rahmen der gewählten Verfahrensführung und tragen so zu einer gesteigerten Prozessökonomie bei. Die Prozessbedingungen laufen dabei vorteilhafterweise bei niedrigen Temperaturen ab und die erhaltenen Produkte zeichnen sich durch eine enge Molekularmassenverteilung und eine geringe Viskosität aus. Ohne durch die Theorie gebunden zu sein, ergibt sich dies hochwahrscheinlich durch die Konditionierung des Katalysators in den Schritten ($\alpha$) und ($\beta$). Insbesondere kann im Rahmen der erfindungsgemäßen Umsetzung auch ein DMC-Katalysator umfassend Zinkhexacyanocobaltat(III) eingesetzt werden.

In einer weiteren Ausgestaltung des Verfahrens kann die Temperatur im Schritt ($\gamma$) $\geq$ 90°C und $\leq$ 130°C betragen. Dieser Temperaturbereich für die Durchführung der Polymerisierungsreaktion hat sich aufgrund der Prozessökonomie und der Eigenschaften der so erhältlichen, höherfunktionellen Polyethercarbonatpolyole als besonders vorteilhaft erwiesen. Die innerhalb dieses Temperaturbereiches erzielbaren Ausbeuten an höherfunktionellen Polyethercarbonatpolyolen sind hoch und es wird ein nahezu vollständiger Umsatz an Monomeren erreicht. Die erhältlichen höherfunktionellen Polyethercarbonatpolyole zeichnen sich dabei durch eine enge Molekularmassenverteilung und steuerbare Funktionalität aus. In einer weiteren Ausführungsform der Erfindung kann die Temperatur im Schritt ($\gamma$) zudem > 95°C und $\leq$ 115°C betragen.

In einer weiteren Verfahrenscharakteristik kann mindestens eines der Alkylenoxide mit einer Epoxyfunktionalität von $\geq$ 2 in Schritt ($\gamma$) folgender Formel (X) entsprechen:

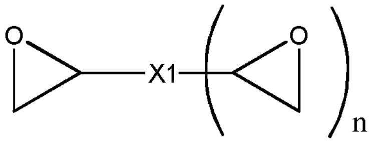

(X),

wobei X1 eine chemische Bindung oder ein di- oder höhervalenter, Heteroatom-enthaltender oder nicht Heteroatom-enthaltender C5-C22 aliphatischer, aromatischer, araliphatischer oder cycloaliphatischer Rest und n eine ganze Zahl ≥ 1 ist.

Diese Verzweigermoleküle, d.h. Alkylenoxide mit einer Epoxyfunktionalität von ≥ 2, zeigen sich im Rahmen der gewählten Prozessführung als besonders geeignet, höherfunktionelle Polyethercarbonatpolyole mit einer steuerbaren Viskosität und einer erhöhten Funktionalität bereitzustellen. Ohne durch die Theorie gebunden zu sein, ergibt sich dies wahrscheinlich durch den Einbau der Moleküle in eine Polyethercarbonat-Kette im Rahmen der Synthesereaktion und einem weiteren Einbau der noch freien Epoxyfunktionalitäten in andere Polyethercarbonat-Ketten. Der gute Einbau gerade dieser Substanzklasse ergibt sich dabei wahrscheinlich durch den elektronischen und sterischen Aufbau der Moleküle. Das Verzweigermolekül kann dabei einen Aufbau zeigen, welcher neben den Oxiranringen sowohl nur aliphatische, nur aromatische oder gemischte aliphatische oder aromatische Strukturen aufweist. Des Weiteren können die Verbindungen außerhalb der Oxiranringe Heteroatome wie beispielsweise Si, N, P, O, S und Halogene aufweisen Beispiele für divalente Verbindungen der Formel 1 sind 1,2,3,4-Diepoxybutan, 1,2,5,6-Diepoxyhexan, 1,2,4,5-Diepoxyhexan, 1,2,9,10-Diepoxydecan, 1,2,11,12-Diepoxydodecan, 1,2-, 1,3- oder 1,4-Di(epoxyethyl)benzol. Beispiele für höhervalente Verbindungen der Formel (X) sind 1,3,5-Tri(oxiran-2-yl)benzol und 1,3,5-Tri(oxiran-2-yl)cyclohexan.

In einer alternativen Ausführungsform des Verfahrens kann mindestens eines der Alkylenoxide mit einer Epoxyfunktionalität von ≥ 2 in Schritt (γ) folgender Formel (XI) entsprechen:

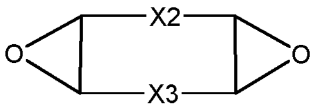

(XI),

wobei X2 und X3 unabhängig voneinander eine chemische Bindung oder Heteroatom-enthaltende oder nicht Heteroatom-enthaltende C5-C22 araliphatische oder aliphatische oder cycloaliphatische Reste sind.

Beispiele für Verbindungen der Formel (XI) sind Cyclopentadiendioxid, Cyclohexadiendioxid, Cyclooctadiendioxid, (3,4-Epoxycyclohexan)methyl-3,4-epoxycyclohexylcarboxylat oder Dicyclopentadiendioxid. Diese Verzweigermoleküle zeigen sich im Rahmen der gewählten Prozessführung als besonders geeignet, höherfunktionelle Polyethercarbonatpolyole mit einer steuerbaren Viskosität und einer erhöhten Funktionalität bereitzustellen. Ohne durch die Theorie gebunden zu sein, ergibt sich dies wahrscheinlich durch den Einbau der Moleküle in eine Polyethercarbonat-Kette im Rahmen der Synthesereaktion und einem weiteren Einbau der noch freien Epoxyfunktionalitäten in andere Polyethercarbonat-Ketten. Der gute Einbau gerade dieser Substanzklasse ergibt sich dabei wahrscheinlich durch den elektronischen und sterischen Aufbau der Moleküle und eine besonders gute Wechselwirkung mit dem verwendeten Katalysator. Diese gute Wechselwirkung kann hochwahrscheinlich insbesondere über das rigide Gerüst des Verzweigermoleküls bedingt sein. Das Verzweigermolekül kann dabei einen Aufbau zeigen, welcher neben den Oxiranringen sowohl nur aliphatische, nur aromatische oder gemischte aliphatische oder aromatische Strukturen aufweist. Des Weiteren können die Verbindungen außerhalb der Oxiranringe Heteroatome wie beispielsweise Si, N, P, O, S und Halogene aufweisen.

In einer zusätzlichen Ausgestaltung des Verfahrens kann mindestens eines der Alkylenoxide mit einer Epoxyfunktionalität von ≥ 2 in Schritt (γ) folgender Formel (XII) entsprechen:

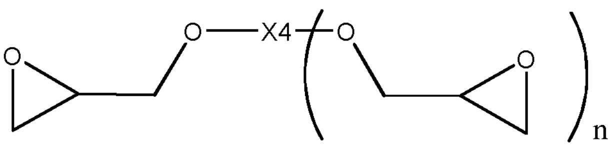

(XII),

wobei X4 ein di- oder multivalenter, Heteroatom-enthaltender oder nicht Heteroatom-enthaltender C5-C22 aliphatischer, aromatischer, araliphatischer oder cycloaliphatischer Rest und n eine ganze Zahl ≥ 1 ist.

Beispiele für Verbindungen der Formel (XII) sind die Diglycidylether der folgenden Diole: Ethylenglycol, 1,2- und 1,3-Propylenglykol, 1,4-Butandiol, Diethylenglykol, Dipropylenglykol, Polyethylenglykol, Polypropylenglykol, Cyclohexandimethanol, TCD-Diol, Neopentylglykol, Bisphenol-A, Bisphenol-F, 1,2-Dihydroxybenzol, Resorcin, 1,4-Dihydroxybenzol, Bishydroxyethyl-bisphenol-A oder kernhydriertes Bisphenol-A.

Divalente Verbindungen der Formel (XII) sind beispielsweise Bisphenol-A-diglycidylether, 1,2-Bis(oxiran-2-ylmethoxy)benzol, 1,3-Bis(oxiran-2-ylmethoxy)benzol, 1,4-Bis(oxiran-2-ylmethoxy)benzol. Beispiele für multivalente Verbindungen der Formel (XII) sind Mehrfachglycidylether von Mehrfachalkoholen, wie beispielsweise 1,3,5-Tris(oxiran-2-ylmethoxy)benzol, Phosphorsäure-triglycidylether. Die Verbindungen der Formel (XII) können in den Resten X4 Ether- und Hydroxygruppen aufweisen. Weiterhin können Gemische unterschiedlicher Verbindungen der Formeln (X), (XI) und (XII), bevorzugt unterschiedlicher Verbindungen der Formel (XII) eingesetzt werden. Diese Verzweigermoleküle zeigen sich im Rahmen der gewählten Prozessführung als besonders geeignet, höherfunktionelle Polyethercarbonatpolyole mit einer steuerbaren Viskosität und einer erhöhten Funktionalität bereitzustellen. Ohne durch die Theorie gebunden zu sein, ergibt sich dies wahrscheinlich durch den Einbau der Moleküle in eine Polyethercarbonat-Kette im Rahmen der Synthesereaktion und einem weiteren Einbau der noch freien Epoxyfunktionalitäten in andere Polyethercarbonat-Ketten. Der gute Einbau dieser Substanzklasse ergibt sich dabei wahrscheinlich durch den elektronischen und sterischen Aufbau der Moleküle und eine besonders gute Wechselwirkung mit dem verwendeten Katalysator. Diese gute Wechselwirkung kann hochwahrscheinlich auf die Flexibilität des Mittelteils des Verzweigermoleküls hervorgerufen werden, welche eine gute Ankontaktierung weiterer Polymere erlauben kann. Das Verzweigermolekül kann dabei einen Aufbau zeigen, welcher neben den Oxiranringen sowohl nur aliphatische, nur aromatische oder gemischte aliphatische oder aromatische Strukturen aufweist. Neben dem Sauerstoff können die Verbindungen außerhalb der Oxiranringe des Weiteren Heteroatome wie beispielsweise S, N, Si, P aufweisen.

In einer weiteren Ausführungsform des Verfahrens kann mindestens eines der Alkylenoxide mit einer Epoxyfunktionalität von ≥ 2 den folgenden Dialkylenoxiden entsprechen: Vinylcyclohexendioxid, Limonendioxid oder Isoprendioxid.

Des Weiteren kann in einem zusätzlichen Aspekt des erfindungsgemäßen Verfahrens die Zugabe des oder der Alkylenoxide mit einer Epoxyfunktionalität von ≥ 2 in Schritt (γ) abgeschlossen sein, bevor 50 mol% der Gesamtmenge an Alkylenoxiden zugegeben wurde. Ohne durch die Theorie gebunden zu sein können als Funktion des Zugabezeitpunktes der Verzweigermoleküle unterschiedliche Molekülgeometrien des höherfunktionellen Polyethercarbonatpolyols resultieren. Eine Möglichkeit des Einflusses des Zugabezeitpunktes auf die erhältliche Molekülgeometrie wird in Schema (XIII) dargestellt (hier beispielhaft: Zugabe eines Äquivalents divalenter Verzweigermoleküle pro Äquivalent bi-funktionellem Starter):

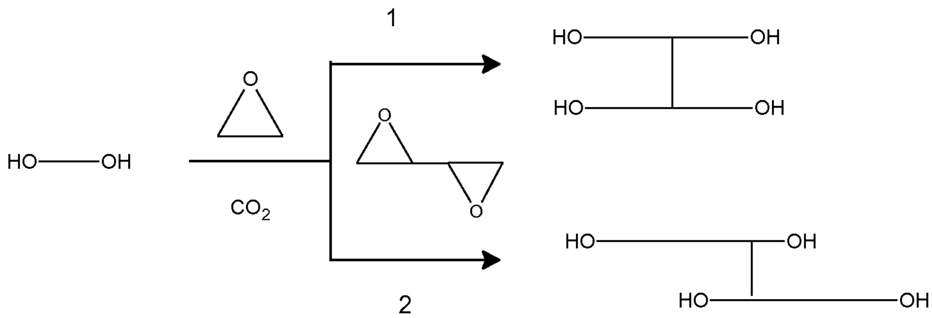


(XIII)

Reaktionsführung 1: Die "Frühe Zugabe":

Die Zugabe ist vorzugsweise abgeschlossen, bevor mehr als die Hälfte, bevorzugt bevor mehr als ein Viertel der Alkylenoxide zugegeben wurde ("frühe Zugabe"). Diese Vorgehensweise führt zu einer eher H-förmigen Molekülgeometrie mit exponierten funktionellen Gruppen, zum Beispiel OH-Gruppen, in den Außenbereichen der Polymerstruktur. Als Konsequenz führt dies zu einer besonders niedrigen Viskosität der erhaltenen Polyethercarbonatpolyole und zu geringeren Gel-Punkten bei einer anschließenden Umsetzung mit Vernetzungsreagentien, wie z.B. Isocyanaten.

Reaktionsführung 2: Die "Späte Zugabe":

Die Zugabe der Verzweigermoleküle kann auch erfolgen, nachdem mehr als die Hälfte, gegebenenfalls nachdem mehr als drei Viertel der Alkylenoxide zugegeben wurde ("späte Zugabe"). Innerhalb dieser Ausführungsform erhält man eher Z-förmige Molekülgeometrien mit erhöhter Viskosität und zumindest partieller sterischer Abschirmung einzelner H-funktioneller Gruppen. Dies kann im Rahmen einer anschließenden Umsetzung mit Vernetzungsreagenzien, wie z.B. Isocyanaten, zu späteren Gel-Punkten führen.

In einer alternativen Ausführungsform kann die Zugabe der Verzweigermoleküle während beliebiger Zeiten oder während der gesamten Zeit der Alkylenoxid-Zugabe erfolgen. Bei Zugabe von mehreren Äquivalenten Verzweigermolekülen bezogen auf die Menge eines eingesetzten bifunktionellen Starters und kontinuierlicher Zugabe der Verzweigermoleküle über einen längeren Zeitraum der Alkylenoxid-Zugabe können leiterförmige Moleküle erhalten werden.

So kann in einer Ausführungsform des erfindungsgemäßen Verfahrens zur Herstellung höher funktioneller Polyethercarbonatpolyolen aus ein oder mehreren Alkylenoxiden, ein oder mehreren Verzweigermolekülen, ein oder mehrerer H-funktioneller Starterverbindungen und Kohlendioxid in Gegenwart eines Doppehnetallcyanid-Katalysators, folgende Verfahrensführung gewählt werden:

Es wird

(α) unter Inertgasatmosphäre (beispielsweise Argon oder Stickstoff), unter einer Atmosphäre aus einem Inertgas-Kohlendioxid-Gemisch oder unter einer reinen Kohlendioxid-Atmosphäre bei Temperaturen von 90 bis 150°C, vorzugsweise von 125 bis 135°C, der DMC-Katalysator vorgelegt und anschließend die H-funktionelle Starterverbindung zugesetzt,

(β) zu dem Gemisch aus Schritt (α) unter Inertgas oder einem Inertgas-Kohlendioxid-Gemisch (beispielsweise Argon-Kohlendioxid-Gemisch oder Stickstoff-Kohlendioxid-Gemisch) oder unter einer reinen Kohlendioxid-Atmosphäre, Alkylenoxid bei Temperaturen von 90 bis 150°C, vorzugsweise von 125 bis 135°C zugegeben, und anschließend

(γ) Verzweigermoleküle, die gegebenenfalls in einem Lösungsmittel oder einem oder mehreren Alkylenoxiden gelöst sind, und Kohlendioxid zu der aus Schritt (β) resultierenden Mischung fortwährend dosiert ("Zugabe Verzweigermoleküle"),

(δ) ein oder mehrere Alkylenoxide und Kohlendioxid zu der aus Schritt (γ) resultierenden Mischung fortwährend dosiert ("Copolymerisation").

Die Schritte (γ) und (δ) können in dieser Reihenfolge ("frühe Zugabe") und in umgekehrter Reihenfolge ("späte Zugabe") durchgeführt werden. Bevorzugt ist die Zugabe der Verzweigermoleküle nach der Aktivierungsphase und zu Beginn der eigentlichen Polymerisation ("frühe Zugabe"). Die Schritte (γ) und (δ) können auch mehrfach in beliebiger Reihenfolge durchgeführt werden.

Die Breite der Molmassenverteilung (Polydispersität) der erfindungsgemäß erhältlichen höherfunktionellen Polyethercarbonatpolyole kann bei früher Zugabe der Verzweigermoleküle geringer als bei einer späteren Zugabe sein. So kann die Polydispersität bei früher Zugabe unterhalb von 4,0 und bei später Zugabe unterhalb von 6,0 liegen. Bevorzugt sind höherfunktionelle Polyethercarbonatpolyole mit einer Polydispersität unterhalb von 2,5.

Die Viskosität der erfindungsgemäßen höherfunktionellen Polyethercarbonatpolyole kann bei früher Zugabe der Verzweigermoleküle geringer sein als bei einer späteren Zugabe. Beispielsweise kann die Viskosität eines Copolymers aus Propylenoxid und $CO_2$ erhalten unter Verwendung von Bisphenol-A-diglycidylether ("BADGE") oder 1,2,9,10-Diepoxydecan ("DED") als Verzweigermolekül bei früher Zugabe zwischen ≥ 1'000 und ≤ 6'000 mPa·s liegen.

Innerhalb einer weiteren Ausführungsform des erfindungsgemäßen Verfahrens können die Schritte (γ) und (δ) in umgekehrter Reihenfolge erfolgen. Diese Verfahrensführung kann insbesondere vorteilhaft sein, falls höherviskose, höherfunktionelle Polyethercarbonatpolyole mit einer breiten Molmassenverteilung, d.h. hohen Polydispersität gewünscht sind. Des Weiteren kann dieses Verfahren vorteilhafterweise angewandt werden, falls im Rahmen weiterer Umsetzungen längere Aushärtezeiten gewünscht sind. Diese längeren Aushärtezeiten können sich beispielsweise bedingt durch die Molekülgeometrie durch eine verstärkte Abschirmung der funktionellen Gruppen an den Enden der Polymere ergeben.

In einer weiteren Ausführungsform des erfindungsgemäßen Verfahrens wird wenigstens der Schritt (δ) kontinuierlich durchgeführt.

In einer weiteren Ausführungsform des erfindungsgemäßen Verfahrens umfasst Schritt (δ) das kontinuierliche Zudosieren einer H-funktionellen Starterverbindung. Die Menge der weiteren H-funktionellen Starterverbindungen, die in Schritt (δ) kontinuierlich in den Reaktor zudosiert werden, beträgt bevorzugt mindestens 20 mol% Äquivalente, besonders bevorzugt mindestens 70 mol% Äquivalente und ganz besonders bevorzugt mindestens 95 mol% Äquivalente (jeweils bezogen auf die gesamte Menge an H-funktionellen Starterverbindungen). Weiterhin werden dem Reaktor kontinuierlich Kohlendioxid und Epoxid zugeführt. Dem Reaktor wird kontinuierlich ein Teil des Produktgemisches entnommen, so dass die in dem Reaktor enthaltene Menge Produktgemisch innerhalb gewisser Grenzen konstant bleibt.

In einer weiteren Ausführungsform des erfindungsgemäßen Verfahrens umfasst Schritt (δ) das diskontinuierliche Zudosieren einer H-funktionellen Starterverbindung. Das diskontinuierliche Zudosieren einer H-funktionellen Starterverbindung kann die Zugabe der H-funktionellen Starterverbindung in einem oder mehreren Pulsen oder mit konstanter oder sich ändernder Zugabegeschwindigkeit über einen Teil der Zeit, während der in Schritt (δ) ein oder mehrere Alkylenoxide und Kohlendioxid zu der aus Schritt (γ) resultierenden Mischung fortwährend dosiert wird, umfassen. Die Menge der weiteren H-funktionellen Starterverbindungen, die in Schritt (δ) kontinuierlich in den Reaktor zudosiert werden, beträgt bevorzugt mindestens 20 mol% Äquivalente, besonders bevorzugt mindestens 70 mol% Äquivalente und ganz besonders bevorzugt mindestens 95 mol% Äquivalente (jeweils bezogen auf die gesamte Menge an H-funktionellen Starterverbindungen). Weiterhin werden dem Reaktor über die zur Herstellung des gewünschten Molekulargewichts benötigte Reaktionszeit kontinuierlich Kohlendioxid und Epoxid zugeführt.

In einer speziellen Ausführungsform des erfindungsgemäßen Verfahrens zur Herstellung höher funktioneller Polyethercarbonatpolyolen aus ein oder mehreren Alkylenoxiden, ein oder mehreren Verzweigermolekülen, ein oder mehrerer H-funktioneller Starterverbindungen und Kohlendioxid in Gegenwart eines Doppelmetallcyanid-Katalysators, kann folgende Verfahrensführung gewählt werden: Es wird

(α) unter Inertgasatmosphäre (beispielsweise Argon oder Stickstoff), unter einer Atmosphäre aus einem Inertgas-Kohlendioxid-Gemisch oder unter einer reinen Kohlendioxid-Atmosphäre bei Temperaturen von 90 bis 150°C, vorzugsweise von 125 bis 135°C, der DMC-Katalysator vorgelegt und anschließend das Suspensionsmittel, das keine H-funktionellen Gruppen enthält, oder die H-funktionelle Starterverbindung zugesetzt,

(β) zu dem Gemisch aus Schritt (α) unter Inertgas oder einem Inertgas-Kohlendioxid-Gemisch (beispielsweise Argon-Kohlendioxid-Gemisch oder Stickstoff-Kohlendioxid-Gemisch) oder unter einer reinen Kohlendioxid-Atmosphäre, Alkylenoxid bei Temperaturen von 90 bis 150°C, vorzugsweise von 125 bis 135°C zugegeben, und anschließend

(δ1) die H-funktionelle Starterverbindung, eine Teilmenge der einen oder mehreren Alkylenoxide und Kohlendioxid zu der aus Schritt (β) resultierenden Mischung fortwährend dosiert ("Copolymerisation"),

(γ) Verzweigermoleküle, die gegebenenfalls in einem Lösungsmittel oder in einem oder mehreren Alkylenoxiden gelöst sind, und Kohlendioxid zu der aus Schritt (δ1) resultierenden Mischung fortwährend dosiert ("Zugabe Verzweigermoleküle"),

(δ2) ein oder mehrere Alkylenoxide und Kohlendioxid zu der aus Schritt (γ) resultierenden Mischung fortwährend dosiert ("Copolymerisation").

Das Verhältnis der Alkylenoxid-Menge in den Schritten (δ1) und (δ2) bestimmt bei dieser Ausführungsform die Architektur der erhaltenen höherfunktionellen Polyethercarbonatpolyole. Die Menge Alkylenoxid in Schritt (δ1) kann im Verhältnis zu der Menge Alkylenoxid in Schritt (δ2) klein sein ("frühe Zugabe"). Die Menge Alkylenoxid in Schritt (δ1) kann jedoch auch im Verhältnis zu der Menge Alkylenoxid in Schritt (δ2) groß sein ("späte Zugabe"). Bevorzugt ist die Menge Alkylenoxid in Schritt (δ1) klein im Verhältnis zu der Menge Alkylenoxid in Schritt (δ2) ("frühe Zugabe"). Beispielsweise kann das Verhältnis der Menge Alkylenoxid in Schritt (δ1) zu der Menge Alkylenoxid in Schritt (δ2) kleiner als 0,5, bevorzugt kleiner als 0,2 betragen. Die Schritte (δ1), (γ) und (δ2) können auch mehrfach in beliebiger Reihenfolge durchgeführt werden.

In einer weiteren speziellen Ausführungsform des erfindungsgemäßen Verfahrens zur Herstellung höherfunktioneller Polyethercarbonatpolyole aus ein oder mehreren Alkylenoxiden, ein oder mehreren Verzweigermolekülen, ein oder mehrerer H-funktioneller Starterverbindungen und Kohlendioxid in Gegenwart eines Doppelmetallcyanid-Katalysators, kann folgende Verfahrensführung gewählt werden: Es wird

(α) unter Inertgasatmosphäre (beispielsweise Argon oder Stickstoff), unter einer Atmosphäre aus einem Inertgas-Kohlendioxid-Gemisch oder unter einer reinen Kohlendioxid-Atmosphäre bei Temperaturen von 90 bis 150°C, vorzugsweise von 125 bis 135°C, der DMC-Katalysator vorgelegt und anschließend das Suspensionsmittel, das keine H-funktionellen Gruppen enthält, zugesetzt,

(β) zu dem Gemisch aus Schritt (α) unter Inertgas oder einem Inertgas-Kohlendioxid-Gemisch (beispielsweise Argon-Kohlendioxid-Gemisch oder Stickstoff-Kohlendioxid-Gemisch) oder unter einer reinen Kohlendioxid-Atmosphäre, Alkylenoxid bei Temperaturen von 90 bis 150°C, vorzugsweise von 125 bis 135°C zugegeben, und anschließend

(γ) Verzweigermoleküle, die gegebenenfalls in einem Lösungsmittel oder in einem oder mehreren Alkylenoxiden gelöst sind, zu der aus Schritt (β) resultierenden Mischung fortwährend dosiert ("Zugabe Verzweigermoleküle").

(δ) die H-funktionelle Starterverbindung, ein oder mehrere Alkylenoxide und Kohlendioxid zu der aus Schritt (β) resultierenden Mischung fortwährend dosiert ("Copolymerisation"),

Die Zugabe der Verbindungen in den Schritten (γ) und (δ) kann in einer beliebigen Reihenfolge begonnen werden. Bevorzugt wird die Zugabe der H-funktionellen Starterverbindung, ein oder mehrerer Alkylenoxide und Kohlendioxid in Schritt (δ) begonnen, bevor die Zugabe der Verzweigermoleküle in Schritt (γ) begonnen wird. Die fortwährende Dosierung der Verzweigermoleküle in Schritt (γ) und der H-funktionellen Starterverbindung, ein oder mehrerer Alkylenoxide und Kohlendioxid in Schritt (δ) erfolgen bei einer kontinuierlichen Verfahrensführung bevorzugt parallel (gleichzeitig) zu einander. Die Schritte (γ) und (δ) können jedoch auch alternierend oder jeweils für sich unter wiederholter pulsweiser Zugabe der Komponenten durchgeführt werden. Parallel zu der fortwährenden Zugabe der Verbindungen in den Schritten (γ) und (δ) wird bei einer kontinuierlichen Verfahrensführung eine Teilmenge des Produktgemisches dem Reaktor kontinuierlich entnommen. Optional ist dem Reaktor ein weiterer Reaktor nachgeschaltet, in dem das erhaltene höherfunktionelle Polyethercarbonatpolyol mit weiterem Alkylenoxid, das jeweils eine Epoxidgruppe je Molekül enthält, und Kohlendioxid umgesetzt wird ("frühe Zugabe" des Verzweigermoleküls). Alternativ kann auch der Schritt (δ) in einem ersten Reaktor durchgeführt werden und Schritt (γ) in einem zweiten Reaktor ("späte Zugabe").

Des Weiteren ist im Sinne der Erfindung ein Verfahren, wobei in einem zusätzlichen Verfahrensschritt das höherfunktionelle Polyethercarbonatpolyol mit Di- und/oder Polyisocyanaten zur Reaktion gebracht wird. Die erfindungsgemäßen höherfunktionellen Polyethercarbonatpolyole weisen im Vergleich zu linearen Polyethercarbonatpolyolen eine geringere Viskosität bei gleicher OH-Zahl auf, wodurch die technische Handhabbarkeit im Rahmen dieser Art von Vernetzungsreaktionen verbessert wird. Ferner zeichnen sich die erfindungsgemäßen höherfunktionellen Polyethercarbonatpolyole durch eine hohe Reaktivität gegenüber Vernetzungsreagenzien, wie Isocyanaten, aus, welches sich durch kürzere Zeiten zur Erreichung des Gel-Punktes ausdrückt. Der zusätzliche Verfahrensschritt kann dabei sowohl direkt in Anschluss an die Synthese der höherfunktionellen Polyethercarbonatpolyole in demselben oder einem nachgelagerten Reaktionsbehältnis erfolgen. Des Weiteren kann dieser Schritt auch erst später, nach Aufreinigung und/oder Lagerung der höherfunktionellen Polyethercarbonatpolyole in weiteren Behältnissen oder zum Beispiel direkt auf der Oberfläche zu beschichtender Werkstücke durchgeführt werden.

Des Weiteren erfindungsgemäß ist ein höherfunktionelles Polyethercarbonatpolyol erhältlich nach dem erfindungsgemäßen Verfahren. Die nach dem erfindungsgemäßen Verfahren erhältlichen höherfunktionellen Polyethercarbonatpolyole zeichnen sich durch eine steuerbare Viskosität, einen geringen Restmonomergehalt und reproduzierbare, hohe Funktionalitäten aus. Die höherfunktionellen Polyethercarbonatpolyole können als Starter für weitere Polymerisationsschritte, wie beispielsweise eine nachfolgende Umsetzung mit Alkylenoxiden oder mit Alkylenoxiden und Kohlendioxid eingesetzt werden. Des Weiteren ermöglicht das erfindungsgemäße Verfahren die Herstellung höherfunktioneller Polyethercarbonatpolyole in einem einzigen Prozessschritt, wobei die Funktionalität der verzweigten Polymerketten stets größer als die Funktionalität der eingesetzten Starterverbindung ist. Für die Herstellung dieser höherfunktionellen Polyethercarbonatpolyole sind nur kleine Mengen der Verzweigermoleküle relativ zu der eingesetzten Menge an Alkylenoxiden und/oder Starterverbindungen nötig.

In einer besonderen Ausführungsform kann die durchschnittliche Anzahl an Verzweigungsstellen im höherfunktionellen Polyethercarbonatpolyol ≥ 1 und ≤ 10, bevorzugt > 1 und ≤ 5 betragen. Die durchschnittliche Anzahl der Verzweigungsstellen je Polyethercarbonatpolyol-Moleküle (Nvz) ergibt sich aus dem molaren Verhältnis der eingesetzten Verzweigermoleküle zu Startermolekülen. Das Verhältnis von Verzweigermolekülen zu Startermolekülen im höherfunktionellen Polyethercarbonatpolyol kann beispielsweise über NMR Spektroskopie und Analyse der Intensitäten der charakteristischen Signale für Verzweigermoleküle und Startermoleküle bestimmt werden. Die durchschnittliche Anzahl an Verzweigungsstellen im höherfunktionellen Polyethercarbonatpolyol ergibt sich gemäß der nachfolgenden Tabelle:

| Funktionalität Startermolekül | Funktionalität Verzweigermolekül | molares Verhältnis Verzweigermoleküle / Startermoleküle | $N_{VZ}$ | F |
|---|---|---|---|---|
| 2 | 2 | 1 / 2 | 1 | 4 |
| 2 | 2 | 2 / 3 | 2 | 6 |
| 2 | 2 | 3 / 4 | 3 | 8 |
| 2 | 3 | 1 / 3 | 1 | 6 |
| 2 | 3 | 2 / 5 | 2 | 10 |
| 3 | 2 | 1 / 2 | 1 | 6 |
| 3 | 2 | 2 / 3 | 2 | 9 |

(fortgesetzt)

| Funktionalität Startermolekül | Funktionalität Verzweigermolekül | molares Verhältnis Verzweigermoleküle / Startermoleküle | $N_{VZ}$ | F |
|---|---|---|---|---|
| 3 | 3 | 1 / 3 | 1 | 9 |
| $N_{VZ}$ durchschnittliche Anzahl der Verzweigungsstellen je Polyethercarbonatpolyol-Moleküle; F durchschnittliche Funktionalität der Polyethercarbonatpolyol-Moleküle | | | | |

Diese Menge an Verzweigermolekülen hat sich für den Erhalt einer relativ hohen Funktionalität der Polyethercarbonatpolyol-Moleküle bei einer mittleren bis geringen Viskosität der Polyethercarbonatpolyole als besonders geeignet erwiesen. Die geringe Viskosität der nach dem erfindungsgemäßen Verfahren erhältlichen höherfunktionellen Polyethercarbonatpolyole sichert zudem eine gute Weiterverarbeitbarkeit der Polymere mit beispielsweise schnellen Umsetzungen im Rahmen weiterer Vernetzungsreaktionen.

Prinzipiell ist es zudem möglich, die Menge an Verzweigermolekülen als Funktion der gewünschten Polymer-Funktionalität zu steuern. Diese kann so gewählt werden, dass die rechnerisch ermittelte durchschnittliche Funktionalität F des erhaltenen höherfunktionellen Polyethercarbonatpolyols mindestens 2, bevorzugt $2 < F \leq 22$, besonders bevorzugt $2 < F \leq 12$, und ganz besonders bevorzugt $2 < F \leq 8$ beträgt. Dies entspricht einem Einbau von durchschnittlich 0-11 Mol Verzweigermoleküle pro Mol Makromolekül, vorzugsweise von 0-6 Mol Verzweigermoleküle pro Mol Makromolekül und besonders bevorzugt von 0-4 Mol Verzweigermoleküle pro Mol Makromolekül. Diese angegebenen Bereiche der durchschnittlichen Funktionalität können zu schnellen Umsetzungen bei Polymerisationsreaktionen und demzufolge zu bevorzugten mechanischen Eigenschaften der so erhältlichen Formkörper oder Schichten beitragen.

Insbesondere lässt sich über die durchschnittliche Anzahl an Verzweigungsstellen das Molekulargewicht der höherfunktionellen Polyethercarbonatpolyole steuern. Vorteilhafterweise kann das Molekulargewicht mindestens 400 g/mol, bevorzugt 400 bis 1000000 g/mol und besonders bevorzugt 500 bis 60000 g/mol betragen. Diese Molekulargewichtsbereiche können zusammen mit der steuerbaren Molekülgeometrie zu geeigneten Viskositäten der höherfunktionellen Polyethercarbonatpolyole führen.

Die erfindungsgemäß herstellbaren höherfunktionellen Polyethercarbonatpolyole können in Wasch- und Reinigungsmittelformulierungen, Bohrflüssigkeiten, Kraftstoffadditiven, ionischen und nicht-ionischen Tensiden, Schmiermitteln, Prozesschemikalien für die Papier- oder Textilherstellung, kosmetischen Formulierungen oder als Porenbildner bei der Herstellung von Keramiken Verwendung finden. Durch die Flexibilität des erfindungsgemäßen Verfahrens lassen sich gezielt höherfunktionelle Polyethercarbonatpolyole mit steuerbaren Funktionalitäten, Molekulargewichtsverteilungen und Viskositäten erhalten, welche sich vorteilhafterweise in oben genannten Anwendungsbereichen einsetzen lassen. Dem Fachmann ist bekannt, dass abhängig vom jeweiligen Anwendungsgebiet die zu verwendenden Polyethercarbonatpolyole gewisse Stoffeigenschaften, wie beispielsweise Molekulargewicht, Viskosität, Funktionalität und/oder Hydroxylzahl erfüllen müssen.

Insbesondere ist zudem ein vernetztes Polyethercarbonat-Polymer im Sinne der Erfindung, welches nach dem erfindungsgemäßen Verfahren aus den höherfunktionellen Polyethercarbonatpolyolen erhältlich ist. Die nach diesem Verfahren erhältlichen Isocyanat-vernetzten Polyethercarbonat-Polymere können sich durch eine einfache Prozessführung bei ihrer Herstellung und verbesserte mechanische Eigenschaften auszeichnen. Dies ist wahrscheinlich durch die im Vergleich zu unverzweigten Polyethercarbonat-Polymeren höhere Funktionalität pro vernetzbarem Polyethercarbonatpolyol-Molekül bedingt. Die steuerbare Viskosität der höherfunktionellen Polyethercarbonatpolyole kann zudem genutzt werden, möglichst gering viskose höherfunktionelle Polyethercarbonatpolyole bereitzustellen, welche zu besonders schnell härtenden und homogenen Produkten führen können.

Des Weiteren können die vernetzten Polyethercarbonat-Polymere in duromeren Festkörpern, viskoelastischen Schäumen oder Beschichtungen Verwendung finden. Die nach dem erfindungsgemäßen Verfahren erhältlichen höherfunktionellen Polyethercarbonatpolyole können problemlos verarbeitet werden, insbesondere durch Umsetzung mit Di- und/oder Polyisocyanaten zu Polyurethanen, insbesondere zu Polyurethan-Weichschaumstoffen, Polyurethan-Hartschaumstoffen, Polyurethan-Elastomeren oder Polyurethan-Beschichtungen. Für Polyurethan-Anwendungen können vorzugsweise höherfunktionelle Polyethercarbonatpolyole eingesetzt werden, die eine Funktionalität von mindestens 2, bevorzugt mindestens 2,5 und besonders bevorzugt mindestens 2,8 besitzen. Als Funktion der Glastemperatur und der Gebrauchstemperatur der vernetzten Polyethercarbonat-Polymere können derart Formkörper oder Schichten mit Elastomer- oder Duromer-Charakter hergestellt werden.

Im Erfindungssinne sind zudem Formkörper aufweisend eine Schicht umfassend ein vernetztes Polyethercarbonat-Polymer. Die erfindungsgemäß herstellbaren Schichten können auf Formkörpern zu einem mechanischen und chemischen Schutz beitragen und so zu einer erhöhten Lebensdauer von Werkstücken beitragen. Bedingt durch die hohe Funktionalität und steuerbare Viskosität können diese Schichten auf Formkörpern schnell und gleichmäßig hergestellt werden. Hinsichtlich weiterer Vorteile und Merkmale der vorbeschriebenen Verwendung wird hiermit explizit auf die Erläuterungen im Zusammenhang mit den erfindungsgemäßen Polymeren sowie dem erfindungsgemäßen Verfahren verwiesen. Auch sollen erfindungsgemäße Merkmale und Vorteile des Verfahrens auch für die erfindungsgemäßen Polymere und die erfindungsgemäße Verwendung anwendbar sein und als offenbart gelten und umgekehrt. Unter die Erfindung fallen auch sämtliche Kombinationen aus zumindest zwei von in der Beschreibung und/oder den Ansprüchen offenbarten Merkmalen.

## Beispiele

### Substanzen:

Eingesetzte H-funktionelle Starterverbindung (Starter):

PET-1 difunktionelles Poly(oxypropylen)polyol mit einer OH-Zahl von 112 mg KOH/g Eingesetztes monofunktionelles Alkylenoxid:
PO Propylenoxid

Eingesetzte Alkylenoxide mit einer Epoxyfunktionalität von ≥ 2:

BAGE Bisphenol-A-diglycidylether
DED 1,2,9,10-Diepoxydecan

Der DMC-Katalysator wurde hergestellt nach Beispiel 6 der WO-A 01/80994.

### Herstellung der höherfunktionellen Polyethercarbonatpolyole:

Die Polymerisationsreaktionen wurden in einem 300 ml Druckreaktor der Fa. Parr durchgeführt. Der in den Beispielen eingesetzte Druckreaktor hatte eine Höhe (innen) von 10,16 cm und einen Innendurchmesser von 6,35 cm. Der Reaktor war ausgestattet mit einem elektrischen Heizmantel (510 Watt maximale Heizleistung). Die Gegenkühlung bestand in einem U-förmig gebogenen Tauchrohr mit 6 mm Außendurchmesser, das bis 5 mm über den Boden in den Reaktor ragte und das mit Kühlwasser von ca. 10°C durchströmt wurde. Der Wasserstrom wurde über ein Magnetventil ein- und ausgeschaltet. Weiterhin war der Reaktor mit einem Einleitrohr sowie einem Thermofühler mit 1,6 mm Durchmesser ausgestattet, die bis 3 mm über den Boden in den Reaktor ragten.

Die Heizleistung des elektrischen Heizmantels lag während der Aktivierung [erste Aktivierungsstufe] im Durchschnitt bei ca. 20% der maximalen Heizleistung. Durch die Regelung schwankte die Heizleistung um ±5% der maximalen Heizleistung. Das Auftreten einer erhöhten Wärmeentwicklung im Reaktor, hervorgerufen durch die rasche Umsetzung von Propylenoxid während der Aktivierung des Katalysators [zweite Aktivierungsstufe] wurde beobachtet über eine reduzierte Wärmeleistung des Heizmantels, Einschalten der Gegenkühlung und gegebenenfalls einen Temperaturanstieg im Reaktor. Das Auftreten einer Wärmeentwicklung im Reaktor, hervorgerufen durch die kontinuierliche Umsetzung von Propylenoxid während der Reaktion [Polymerisationsstufe] führte zu einem Absenken der Leistung des Heizmantels auf ca. 8% der maximalen Heizleistung. Durch die Regelung schwankte die Heizleistung um ±5% der maximalen Heizleistung.

Bei dem in den Beispielen eingesetzten Hohlwellenrührer handelte es sich um einen Hohlwellenrührer, bei dem das Gas über eine hohle Welle des Rührers in die Reaktionsmischung eingeleitet wurde. Der auf der Hohlwelle angebrachte Rührkörper wies vier Arme auf, hatte einen Durchmesser von 35 mm und eine Höhe von 14 mm. An jedem Ende des Arms waren zwei Gasauslässe angebracht, die einen Durchmesser von 3 mm aufwiesen. Durch die Drehung des Rührers entstand ein Unterdruck derart, dass das über der Reaktionsmischung befindliche Gas ($CO_2$ und ggf. Alkylenoxid) abgesaugt wurde und über die Hohlwelle des Rührers in die Reaktionsmischung eingeleitet wurde.

Für die Abtrennung der niedermolekularen Bestandteile wurde die Reaktionsmischung mit Dichlormethan (20 ml) verdünnt und die Lösung durch einen Fallfilmverdampfer geleitet. Die Lösung lief entlang der inneren Wand eines von außen auf 120°C beheizten Rohres mit 70 mm Durchmesser und 200 mm Länge herab (0,1 kg in 3 h), wobei die Reaktionsmischung durch drei mit einer Geschwindigkeit von 250 U/min rotierende Rollen mit 10 mm Durchmesser jeweils gleichmäßig als dünner Film auf der inneren Wand des Fallfilmverdampfers verteilt wurde. Im Inneren des Rohres wurde über eine Pumpe ein Druck von 3 mbar eingestellt. Das von leicht flüchtigen Bestandteilen (nicht umgesetzte Alkylenoxide, cyclisches Carbonat, Lösungsmittel) gereinigte Produktgemisch wurde am unteren Ende des beheizten Rohres in einer Vorlage aufgefangen.

**Charakterisierung der höherfunktionellen Polyethercarbonatpolyole:**

Bei der Copolymerisation von Propylenoxid und $CO_2$ resultiert neben dem cyclischen Propylencarbonat das Polyethercarbonatpolyol, welches neben den Verzweigungen einerseits in Formel (XIV) gezeigte Polycarbonat-Einheiten,

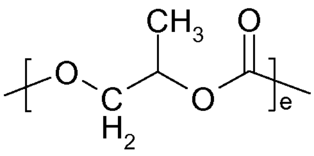

bzw.

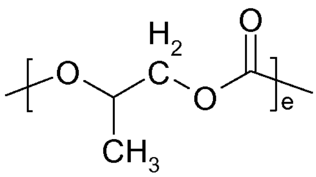

(XIV)

und andererseits in Formel (XV) gezeigte Polyether-Einheiten enthält.

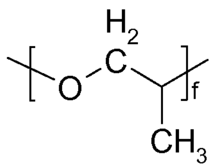

bzw.

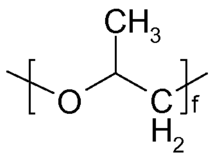

(XV)

Die Charakterisierung der Reaktionmischung durch Bestimmung des Gehalts an nicht umgesetztem Propylenoxid ($R_{PO}$), nicht umgesetzten Verzweigermolekülen ($R_{BADGE}$, $R_{DED}$) und cyclischem Carbonat (Verhältnis g/e) erfolgte durch $^1$H-NMR Spektroskopie entsprechend der unten beschriebenen Methode.

Die niedermolekularen Verbindungen in der Reaktionsmischung wurden anschließend in einem Fallfilmverdampfer entsprechend der oben beschriebenen Methode abgetrennt und das erhaltene Produktgemisch zur Bestimmung des $CO_2$ Gehaltes im Polymer (Verhältnis e/f, $A_{Carbonat}$) sowie bei Verwendung von BADGE oder DED als Verzweigermolekül der Gehalt an Verzweigermolekülen im Polymer ($A_{BADGE}$, $A_{DED}$) durch $^1$H-NMR Spektroskopie entsprechend der unten beschriebenen Methode untersucht. Weiterhin wurde das Produktgemisch mittels Gelpermeationschromatographie sowie Bestimmung der OH-Zahl, der Viskosität und des Gel-Punktes entsprechend den unten beschriebenen Methoden charakterisiert.

**Methoden:**

*$^1$H-NMR Spektroskopie*

Eine Probe der Reaktionsmischung oder des Produktgemisches wurde in deuteriertem Chloroform gelöst und auf einem Spektrometer der Firma Bruker (AV400, 400 MHz) vermessen. Die relevanten Resonanzen im $^1$H-NMR Spektrum (bezogen auf TMS = 0 ppm) ergeben sich wie folgt:

| Signal | Verschiebung in ppm | Bezeichnung | Fläche entspricht Anzahl H-Atomen |
|---|---|---|---|
| I1 | 1,11 - 1,17 | $CH_3$-Gruppe der Polyether-Einheiten | 3 |
| I2 | 1,25 - 1,32 | $CH_3$-Gruppe der Polycarbonat-Einheiten | 3 |
| I3 | 1,45 - 1,49 | $CH_3$-Gruppe des cyclischen Carbonats | 3 |
| I4 | 1,86 - 1,95 | $CH_3$-Gruppen des in das Polymer eingebauten Bisphenol-A-diglycidylethers | 6 |
| I5 | 2,95 - 2,99 | CH Gruppe des freien, nicht abreagierten Propylenoxids | 1 |
| I6 | 3,04 - 3,09 | CH Gruppe des freien, nicht abreagierten Bisphenol-A-diglycidylethers | 1 |

(fortgesetzt)

| Signal | Verschiebung in ppm | Bezeichnung | Fläche entspricht Anzahl H-Atomen |
|---|---|---|---|
| I7 | 2,53 - 2,57 | CH Gruppe des freien, nicht abreagierten 1,2,9,10-Diepoxydecans | 1 |

Unter Berücksichtigung der relativen Intensitäten wurden die Werte wie folgt berechnet:

Der molare Anteil des nicht umgesetzten Propylenoxids ($R_{PO}$ in mol%) bezogen auf die Summe der bei der Aktivierung und der Copolymerisation eingesetzten Menge an Propylenoxid:

$$R_{PO} = [(I5) / ((I1/3) + (I2/3) + (I3/3) + (I4/6) + (I5) + (I6))] \times 100\% \qquad (XX)$$

Der molare Anteil des nicht umgesetzten Bisphenol-A-diglycidylether ($R_{BADGE}$ in mol%) bezogen auf die Summe der bei der Aktivierung und der Copolymerisation eingesetzten Menge an Bisphenol-A-diglycidylether:

$$R_{BADGE} = [(I6) / ((I1/3) + (I2/3) + (I3/3) + (I4/6) + (I5) + (I6))] \times 100\% \qquad (XXI)$$

Der molare Anteil des nicht umgesetzten 1,2,9,10-Diepoxydecans ($R_{DED}$ in mol%) bezogen auf die Summe der bei der Aktivierung und der Copolymerisation eingesetzten Menge an 1,2,9,10-diepoxydecan:

$$R_{DED} = [(I7) / ((I1/3) + (I2/3) + (I3/3) + (I5) + (I7))] \times 100\% \qquad (XXI)$$

Molares Verhältnis der Menge an cyclischem Propylencarbonat zu Polymer (Selektivität, g/e):

$$g/e = I3 / I2 \qquad (XVI)$$

Molares Verhältnis von Carbonatgruppen zu Ethergruppen im Polymer (e/f):

$$e/f = I2 / I1 \qquad (XVII)$$

Der Anteil an Carbonateinheiten ($A_{carbonat}$ in mol%) in den Wiederholungseinheiten des Polyethercarbonatpolyols:

$$A_{Carbonat} = [(I2/3) / ((I1/3) + (I2/3) + (I4/6))] \times 100\% \qquad (XVIII)$$

Der molare Anteil an umgesetzten Bisphenol-A-diglycidylether ($A_{BADGE}$ in mol%) in den Wiederholungseinheiten des Polyethercarbonatpolyols:

$$A_{BADGE} = [(I4/3) / ((I1/3) + (I2/3) + (I4/6))] \times 100\% \qquad (XIX)$$

*Gelpermeationschromatographie*

Das Zahlenmittel $M_n$ und das Gewichtsmittel $M_w$ des Molekulargewichts der entstandenen Polyethercarbonatpolyole wurde mittels Gelpermeationschromatographie (GPC) bestimmt. Es wurde nach DIN 55672-1: "Gelpermeationschromatographie, Teil 1 - Tetrahydrofuran als Elutionsmittel" vorgegangen (SECurity GPC-System von PSS Polymer Service, Flussrate 1.0 ml/min; Säulen: 2×PSS SDV linear M, 8×300 mm, 5 μm; RID-Detektor). Dabei wurden Polystyrolproben bekannter Molmasse zur Kalibrierung verwendet. Die Polydispersität wurde als das Verhältnis $M_w/M_n$ berechnet.

*OH-Zahl (Hydroxylzahl)*

Die OH-Zahl (Hydroxylzahl) wurde in Anlehnung an DIN 53240-2 bestimmt, wobei jedoch *N*-Methylpyrrolidon anstelle von THF/Dichlormethan als Lösemittel verwendet wurde. Es wurde mit 0,5 molarer ethanolischer KOH Lösung titriert und die Endpunktserkennung erfolgte mittels Potentiometrie. Als Prüfsubstanz diente zertifiziertes Rizinusöl. Die Angabe der Einheit in "$mg_{KOH}/g$" bezieht sich auf mg[KOH]/g[Polyetherestercarbonatpolyol].

*Rheologie*

Die Viskosität des Produktgemisches wurde mit einem Rheometer Physica MCR 501 der Firma Anton Paar bei 25°C bestimmt, wobei eine Kugel-Platte-Konfiguration mit einem Kugeldurchmesser von 25 mm mit einem Abstand von 0,05 mm zwischen Kugel und Platte verwendet wurden. Die Scherrate wurde innerhalb von 10 min von 0,01 auf 1000 1/s gesteigert. Alle 10 s wurde ein Wert genommen. Angegeben ist die Viskosität als der Durchschnitt der insgesamt 60 Messwerte.

Für die rheologische Bestimmung des Gel-Punktes wurden die Polyethercarbonatpolyole mit einer äquimolaren Menge aliphatischer Polyisocyanate (HDI-Trimerisat, Desmodur N3300) und 2000 ppm Dibutylzinnlaurat (2% in Diphenylether) versetzt. Die komplexen Moduli G' (Speichermodul) und G" (Verlustmodul) wurden in einer Oszillationsmessung bei 40°C und einer Frequenz von 1 Hz bestimmt, wobei eine Platte-Platte-Konfiguration mit einem Plattendurchmesser von 15 mm, einem Plattenabstand von 1 mm und einer 10 prozentigen Deformation verwendet wurden. Der Gel-Punkt wurde als der Zeitpunkt definiert, an welchem Speicher- und Verlustmodul gleich groß waren.

**Beispiel 1: Höherfunktionelles Polyethercarbonatpolyol mit einer rechnerischen Funktionalität von 2,7 erhalten durch "frühe Zugabe" von BADGE**

[Schritt (α)]

In einem 300 ml Druckreaktor ausgestattet mit Gaseintragsrührer wurde eine Mischung aus DMC-Katalysator (13,6 mg) und PET-1 (17,4 g) vorgelegt und 30 min bei 130°C unter leichtem Vakuum (50 mbar) und leichtem Ar-Strom gerührt (800 rpm).

[Schritt (β)]

Es wurden 15 bar $CO_2$ aufgepresst, wodurch die Temperatur im Reaktor leicht absank. Die Temperatur wurde auf 130°C nachgeregelt und während der nachfolgenden Schritte der Druck im Reaktor durch Nachdosieren von $CO_2$ bei 15 bar gehalten. Es wurden 1,74 g Propylenoxid mit Hilfe einer HPLC-Pumpe (1 mL/min) zu dosiert und die Reaktionsmischung für 20 min gerührt (800 rpm). Auftreten einer kurzzeitig erhöhten Wärmeentwicklung im Reaktor während dieser Zeit zeigte die Aktivierung des Katalysators an. Anschließend wurden weitere 1,74 g Propylenoxid mit Hilfe der HPLC-Pumpe (1 ml/min) zudosiert und die Reaktionsmischung für 20 min gerührt (800 rpm). Das Auftreten einer kurzzeitig erhöhten Wärmeentwicklung im Reaktor während dieser Zeit bestätigte die Aktivierung des Katalysators.

[Schritt (γ)]

Nach Abkühlen auf 100°C wurden unter Rühren ein Gemisch aus 3,42 g (10,05 mmol) Bisphenol-A-diglycidylether gelöst in 7,97 g Propylenoxid über eine HPLC-Pumpe (1 mL/min) zudosiert, wobei die Reaktionsmischung weiterhin gerührt wurde (800 rpm).

[Schritt (δ)]

Direkt im Anschluss wurden unter weiterem Rühren (800 rpm) weitere 34,0 g Propylenoxid über eine HPLC-Pumpe (1 mL/min) zudosiert. Nach Ende der Zugabe von Propylenoxid wurde die Reaktionsmischung noch weitere 2 h bei 100°C gerührt. Durch Abkühlen des Reaktors im Eisbad wurde die Reaktion beendet, der Überdruck wurde abgelassen und das resultierende Produkt analysiert.

Die NMR-spektroskopische Untersuchung des Reaktionsgemisches zeigte einen vollständigen Umsatz des Propylenoxids ($R_{PO}$ = 0%) und des BADGE ($R_{BADGE}$ = 0%).

| | | |
|---|---|---|
| Selektivität | g/e | 0,14 |
| | e/f ($A_{carbonat}$) | 0,17 (17,8 % Carbonateinheiten im PEC) |

(fortgesetzt)

| | | |
|---|---|---|
| $A_{BADGE}$ in % | | 0,93 |
| Molekulargewicht in g/mol | $M_n$ | 2316 |
| | $M_w$ | 2617 |
| Polydispersität | | 1,13 |
| OH-Zahl in $mg_{KOH}/g$ | | 69,4 |
| Viskosität in mPa·s | | 1065 |
| Gelpunkt in min | | 7,6 |

**Beispiel 2: Höherfunktionelles Polyethercarbonatpolyol mit einer rechnerischen Funktionalität von 2,7 erhalten durch "späte Zugabe" von BADGE**

[Schritt (α)]

In einem 300 ml Druckreaktor ausgestattet mit Gaseintragsrührer wurde eine Mischung aus DMC-Katalysator (13,6 mg) und PET-1 (17,4 g) vorgelegt und 30 min bei 130°C unter leichtem Vakuum (50 mbar) und leichtem Ar-Strom gerührt (800 rpm).

[Schritt (β)]

Es wurden 15 bar $CO_2$ aufgepresst, wodurch die Temperatur im Reaktor leicht absank. Die Temperatur wurde auf 130°C nachgeregelt und während der nachfolgenden Schritte der Druck im Reaktor durch Nachdosieren von $CO_2$ bei 15 bar gehalten. Es wurden 1,74 g Propylenoxid mit Hilfe einer HPLC-Pumpe (1 mL/min) zudosiert und die Reaktionsmischung für 20 min gerührt (800 rpm). Das Auftreten einer kurzzeitig erhöhten Wärmeentwicklung im Reaktor während dieser Zeit zeigte die Aktivierung des Katalysators an. Anschließend wurden weitere 1,74 g Propylenoxid mit Hilfe der HPLC-Pumpe (1 ml/min) zudosiert und die Reaktionsmischung für 20 min gerührt (800 rpm). Das Auftreten einer kurzzeitig erhöhten Wärmeentwicklung im Reaktor während dieser Zeit bestätigte die Aktivierung des Katalysators.

[Schritt (δ)]

Nach Abkühlen auf 100°C wurden unter weiterem Rühren (800 rpm) weitere 34,0 g Propylenoxid über eine HPLC-Pumpe (1 mL/min) zudosiert.

[Schritt (γ)]

Direkt im Anschluss wurden unter Rühren ein Gemisch aus 3,42 g (10,1 mmol) Bisphenol-A-diglycidylether gelöst in 7,97 g Propylenoxid über eine HPLC-Pumpe (1 mL/min) zudosiert, wobei die Reaktionsmischung weiterhin gerührt wurde (800 rpm). Nach Ende der Zugabe von Propylenoxid wurde die Reaktionsmischung noch weitere 2 h bei 100°C gerührt. Durch Abkühlen des Reaktors im Eisbad wurde die Reaktion beendet, der Überdruck wurde abgelassen und das resultierende Produkt analysiert.

Die NMR-spektroskopische Untersuchung des Reaktionsgemisches zeigte einen vollständigen Umsatz des Propylenoxids ($R_{PO}$ = 0%) und des BADGE ($R_{BADGE}$ = 0%).

| | | |
|---|---|---|
| Selektivität | g/e | 0,22 |
| | e/f($A_{carbonat}$) | 0,17 (14,3 % Carbonateinheiten im PEC) |
| $A_{BADGE}$ in % | | 0,93 |
| Molekulargewicht in g/mol | $M_n$ | 3011 |
| | $M_w$ | 4576 |
| Polydispersität | | 1,52 |
| OH-Zahl in $mg_{KOH}/g$ | | 69,3 |

(fortgesetzt)

| | |
|---|---|
| Viskosität in mPa·s | 1269 |
| Gelpunkt in min | 8,4 |

**Vergleichsbeispiel 3: Unverzweigtes, lineares Polyethercarbonatpolyol mit einer Funktionalität von 2,0**

[Schritt (α)]

In einem 300 ml Druckreaktor ausgestattet mit Gaseintragsrührer wurde eine Mischung aus DMC-Katalysator (13,6 mg) und PET-1 (17,4 g) vorgelegt und 30 min bei 130°C unter leichtem Vakuum (50 mbar) und leichtem Ar-Strom gerührt (800 rpm).

[Schritt (β)]

Es wurden 15 bar $CO_2$ aufgepresst, wodurch die Temperatur im Reaktor leicht absank. Die Temperatur wurde auf 130°C nachgeregelt und während der nachfolgenden Schritte der Druck im Reaktor durch Nachdosieren von $CO_2$ bei 15 bar gehalten. Es wurden 1,74 g Propylenoxid mit Hilfe einer HPLC-Pumpe (1 mL/min) zudosiert und die Reaktionsmischung für 20 min gerührt (800 rpm). Auftreten einer kurzzeitig erhöhten Wärmeentwicklung im Reaktor während dieser Zeit zeigte die Aktivierung des Katalysators an. Anschließend wurden weitere 1,74 g Propylenoxid mit Hilfe der HPLC-Pumpe (1 ml/min) zudosiert und die Reaktionsmischung für 20 min gerührt (800 rpm). Das Auftreten einer kurzzeitig erhöhten Wärmeentwicklung im Reaktor während dieser Zeit bestätigte die Aktivierung des Katalysators.

[Schritt (δ)]

Nach Abkühlen auf 100°C wurden unter weiterem Rühren (800 rpm) 45,4 g Propylenoxid über eine HPLC-Pumpe (1 mL/min) zudosiert.

Nach Ende der Zugabe von Propylenoxid wurde die Reaktionsmischung noch weitere 2 h bei 100°C gerührt. Durch Abkühlen des Reaktors im Eisbad wurde die Reaktion beendet, der Überdruck wurde abgelassen und das resultierende Produkt analysiert.

Die NMR-spektroskopische Untersuchung des Reaktionsgemisches zeigte einen vollständigen Umsatz des Propylenoxids ($R_{PO}$ = 0%).

| | | |
|---|---|---|
| Selektivität | g/e | 0,10 |
| | e/f ($A_{carbonat}$) | 0,20 (16,4 % Carbonateinheiten im PEC) |
| $A_{BADGE}$ in % | | 0 |
| Molekulargewicht in g/mol | $M_n$ | 2846 |
| | $M_w$ | 3585 |
| Polydispersität | | 1,26 |
| OH-Zahl in $mg_{KOH}/g$ | | 67,7 |
| Viskosität in mPa·s | | 1680 |
| Gelpunkt in min | | 10,5 |

**Vergleich der Beispiele 1 - 3:**

| Beispiel | Zugabe des Verzweigermoleküls | Funktionalität des Produktes | Viskosität mPa·s | Gelpunkt min |
|---|---|---|---|---|
| 1 | Frühe Zugabe | 2,7 | 1065 | 7,6 |
| 2 | Späte Zugabe | 2,7 | 1269 | 8,4 |

(fortgesetzt)

| Beispiel | Zugabe des Verzweigermoleküls | Funktionalität des Produktes | Viskosität mPa·s | Gelpunkt min |
|---|---|---|---|---|
| 3 (Vgl.) | --- | 2 | 1680 | 10,5 |
| Vgl.: Vergleichsbeispiel | | | | |

Der Vergleich des Beispiels 1 mit Beispiel 2 zeigt, dass die frühe Zugabe von Verzweigermolekülen vorteilhaft ist, da eine geringere Viskosität und eine höhere Reaktivität gegenüber Isocyanaten (kürzere Zeit bis Erreichen des Gelpunktes) erreicht wird.

Eine Gegenüberstellung des Beispiels 1 mit dem Vergleichsbeispiel 3 zeigt, dass das höherfunktionelle Polyethercarbonatpolyol im Vergleich zu dem linearen Polyethercarbonatpolyol eine geringere Viskosität und höhere Reaktivität (kürzere Zeit bis Erreichen des Gelpunktes) aufweist.

**Beispiel 4: Höherfunktionelles Polyethercarbonatpolyol mit einer rechnerischen Funktionalität von 2,5 erhalten durch "frühe Zugabe" von BADGE**

[Schritt (α)]

In einem 300 ml Druckreaktor ausgestattet mit Gaseintragsrührer wurde eine Mischung aus DMC-Katalysator (16 mg) und PET-1 (10 g) vorgelegt und 30 min bei 130°C unter leichtem Vakuum (50 mbar) und leichtem Ar-Strom gerührt (700 rpm).

[Schritt (β)]

Es wurden 15 bar $CO_2$ aufgepresst, wodurch die Temperatur im Reaktor leicht absank. Die Temperatur wurde auf 130°C nachgeregelt und während der nachfolgenden Schritte der Druck im Reaktor durch Nachdosieren von $CO_2$ bei 15 bar gehalten. Es wurden 3,5 g Propylenoxid mit Hilfe einer HPLC-Pumpe (1 mL/min) zu dosiert und die Reaktionsmischung für 20 min gerührt (700 rpm). Auftreten einer kurzzeitig erhöhten Wärmeentwicklung im Reaktor während dieser Zeit zeigte die Aktivierung des Katalysators an. Anschließend wurden noch zwei weitere mal 3,5 g Propylenoxid mit Hilfe der HPLC-Pumpe (1 ml/min) zudosiert und die Reaktionsmischung für 20 min gerührt (700 rpm). Das Auftreten einer kurzzeitig erhöhten Wärmeentwicklung im Reaktor während dieser Zeit bestätigte die Aktivierung des Katalysators.

[Schritt (γ)]

Nach Abkühlen auf 100°C wurden unter Rühren ein Gemisch aus 1,36 g (4 mmol) Bisphenol-A-diglycidylether gelöst in 12,24 g Propylenoxid über eine HPLC-Pumpe (1 mL/min) zudosiert, wobei die Reaktionsmischung weiterhin gerührt wurde (700 rpm).

[Schritt (δ)]

Direkt im Anschluss wurden unter weiterem Rühren (800 rpm) weitere 46,9 g Propylenoxid über eine HPLC-Pumpe (1 mL/min) zudosiert. Nach Ende der Zugabe von Propylenoxid wurde die Reaktionsmischung noch weitere 2 h bei 100°C gerührt. Durch Abkühlen des Reaktors im Eisbad wurde die Reaktion beendet, der Überdruck wurde abgelassen und das resultierende Produkt analysiert.

Die NMR-spektroskopische Untersuchung des Reaktionsgemisches zeigte einen vollständigen Umsatz des Propylenoxids ($R_{PO}$ = 0%) und des BADGE ($R_{BADGE}$ = 0%).

| | | |
|---|---|---|
| Selektivität | g/e | 0,08 |
| | e/f($A_{carbonat}$) | 0,25 (17,6 % Carbonateinheiten im PEC) |
| $A_{BADGE}$ in % | | 0,33 |
| Molekulargewicht in g/mol | $M_n$ | 5699 |
| | $M_w$ | 13797 |
| Polydispersität | | 2,42 |

(fortgesetzt)

| | |
|---|---|
| OH-Zahl in $mg_{KOH}/g$ | 28,5 |
| Viskosität in mPa·s | 4069 |
| Gelpunkt in min | 17,3 |

**Beispiel 5: Höherfunktionelles Polyethercarbonatpolyol mit einer rechnerischen Funktionalität von 2,5 erhalten durch "späte Zugabe" von BADGE**

[Schritt (α)]

In einem 300 ml Druckreaktor ausgestattet mit Gaseintragsrührer wurde eine Mischung aus DMC-Katalysator (16 mg) und PET-1 (10 g) vorgelegt und 30 min bei 130°C unter leichtem Vakuum (50 mbar) und leichtem Ar-Strom gerührt (700 rpm).

[Schritt (β)]

Es wurden 15 bar $CO_2$ aufgepresst, wodurch die Temperatur im Reaktor leicht absank. Die Temperatur wurde auf 130°C nachgeregelt und während der nachfolgenden Schritte der Druck im Reaktor durch Nachdosieren von $CO_2$ bei 15 bar gehalten. Es wurden 3,5 g Propylenoxid mit Hilfe einer HPLC-Pumpe (1 mL/min) zu dosiert und die Reaktionsmischung für 20 min gerührt (700 rpm). Auftreten einer kurzzeitig erhöhten Wärmeentwicklung im Reaktor während dieser Zeit zeigte die Aktivierung des Katalysators an. Anschließend wurden noch zwei weitere mal 3,5 g Propylenoxid mit Hilfe der HPLC-Pumpe (1 ml/min) zudosiert und die Reaktionsmischung für 20 min gerührt (700 rpm). Das Auftreten einer kurzzeitig erhöhten Wärmeentwicklung im Reaktor während dieser Zeit bestätigte die Aktivierung des Katalysators.

[Schritt (δ)]

Nach Abkühlen auf 100°C wurden unter weiterem Rühren (700 rpm) weitere 45,26 g Propylenoxid über eine HPLC-Pumpe (1 mL/min) zudosiert.

[Schritt (γ)]

Direkt im Anschluss wurden unter Rühren ein Gemisch aus 1,36 g (4 mmol) Bisphenol-A-diglycidylether gelöst in 12,24 g Propylenoxid sowie anschließend weitere 2 g Propylenoxid über eine HPLC-Pumpe (1 mL/min) zudosiert, wobei die Reaktionsmischung weiterhin gerührt wurde (700 rpm). Nach Ende der Zugabe von Propylenoxid wurde die Reaktionsmischung noch weitere 2 h bei 100°C gerührt. Durch Abkühlen des Reaktors im Eisbad wurde die Reaktion beendet, der Überdruck wurde abgelassen und das resultierende Produkt analysiert.

Die NMR-spektroskopische Untersuchung des Reaktionsgemisches zeigte einen vollständigen Umsatz des Propylenoxids ($R_{PO}$ = 0%) und des BADGE ($R_{BADGE}$ = 0%).

| | | |
|---|---|---|
| Selektivität | g/e | 0,07 |
| | e/f($A_{carbonat}$) | 0,23 (20,0 % Carbonateinheiten im PEC) |
| $A_{BADGE}$ in % | | 0,29 |
| Molekulargewicht in g/mol | $M_n$ | 6115 |
| | $M_w$ | 22396 |
| Polydispersität | | 3,32 |
| OH-Zahl in $mg_{KOH}/g$ | | 29,3 |
| Viskosität in mPa·s | | 9749 |
| Gelpunkt in min | | 20,7 |

**Vergleichsbeispiel 6: Unverzweigtes, lineares Polyethercarbonatpolyol mit einer Funktionalität von 2,0**

[Schritt (α)]

In einem 300 ml Druckreaktor ausgestattet mit Gaseintragsrührer wurde eine Mischung aus DMC-Katalysator (16 mg) und PET-1 (10 g) vorgelegt und 30 min bei 130°C unter leichtem Vakuum (50 mbar) und leichtem Ar-Strom gerührt (700 rpm).

[Schritt (β)]

Es wurden 15 bar $CO_2$ aufgepresst, wodurch die Temperatur im Reaktor leicht absank. Die Temperatur wurde auf 130°C nachgeregelt und während der nachfolgenden Schritte der Druck im Reaktor durch Nachdosieren von $CO_2$ bei 15 bar gehalten. Es wurden 3,5 g Propylenoxid mit Hilfe einer HPLC-Pumpe (1 mL/min) zudosiert und die Reaktionsmischung für 20 min gerührt (700 rpm). Auftreten einer kurzzeitig erhöhten Wärmeentwicklung im Reaktor während dieser Zeit zeigte die Aktivierung des Katalysators an. Anschließend wurden noch zwei weitere mal 3,5 g Propylenoxid mit Hilfe der HPLC-Pumpe (1 ml/min) zudosiert und die Reaktionsmischung für 20 min gerührt (700 rpm). Das Auftreten einer kurzzeitig erhöhten Wärmeentwicklung im Reaktor während dieser Zeit bestätigte die Aktivierung des Katalysators.

[Schritt (δ)]

Nach Abkühlen auf 100°C wurden unter weiterem Rühren (700 rpm) 59,5 g Propylenoxid über eine HPLC-Pumpe (1 mL/min) zudosiert. Nach Ende der Zugabe von Propylenoxid wurde die Reaktionsmischung noch weitere 2 h bei 100°C gerührt. Durch Abkühlen des Reaktors im Eisbad wurde die Reaktion beendet, der Überdruck wurde abgelassen und das resultierende Produkt analysiert.

Die NMR-spektroskopische Untersuchung des Reaktionsgemisches zeigte einen vollständigen Umsatz des Propylenoxids ($R_{PO}$ = 0%).

| | | |
|---|---|---|
| Selektivität | g/e | 0,07 |
| | e/f($A_{carbonat}$) | 0,26 (20,7 % Carbonateinheiten im PEC) |
| Molekulargewicht in g/mol | $M_n$ | 6329 |
| | $M_w$ | 14082 |
| Polydispersität | | 2,22 |
| OH-Zahl in $mg_{KOH}$/g | | 28,4 |
| Viskosität in mPa·s | | 6980 |
| Gelpunkt in min | | 25,6 |

**Vergleich der Beispiele 4 - 6:**

| Beispiel | Zugabe des Verzweigermoleküls | Funktionalität des Produktes | Viskosität mPa·s | Gelpunkt min |
|---|---|---|---|---|
| 4 | Frühe Zugabe | 2,5 | 4069 | 17,3 |
| 5 | Späte Zugabe | 2,5 | 9749 | 20,7 |
| 6 (Vgl.) | --- | 2 | 6980 | 25,6 |

Der Vergleich des Beispiels 4 mit dem Beispiel 5 zeigt, dass die frühe Zugabe von Verzweigermolekülen vorteilhaft ist, da die Viskosität geringer und die Reaktivität gegenüber Isocyanaten höher ist (kürzere Zeit bis Erreichen des Gelpunktes).

Eine Gegenüberstellung des Beispiels 4 mit dem Vergleichsbeispiel 6 zeigt, dass das höherfunktionelle Polyethercarbonatpolyol im Vergleich zu dem linearen Polyethercarbonatpolyol eine geringere Viskosität und höhere Reaktivität (kürzere Zeit bis Erreichen des Gelpunktes) aufweist.

**Beispiel 7: Höherfunktionelles Polyethercarbonatpolyol mit einer rechnerischen Funktionalität von 2,8 erhalten durch "frühe Zugabe" von BADGE**

[Schritt (α)]

In einem 300 ml Druckreaktor ausgestattet mit Gaseintragsrührer wurde eine Mischung aus DMC-Katalysator (16 mg) und PET-1 (8,7 g) vorgelegt und 30 min bei 130°C unter leichtem Vakuum (50 mbar) und leichtem Ar-Strom gerührt (700 rpm).

[Schritt (β)]

Es wurden 15 bar $CO_2$ aufgepresst, wodurch die Temperatur im Reaktor leicht absank. Die Temperatur wurde auf 130°C nachgeregelt und während der nachfolgenden Schritte der Druck im Reaktor durch Nachdosieren von $CO_2$ bei 15 bar gehalten. Es wurden 3,5 g Propylenoxid mit Hilfe einer HPLC-Pumpe (1 mL/min) zu dosiert und die Reaktionsmischung für 20 min gerührt (700 rpm). Auftreten einer kurzzeitig erhöhten Wärmeentwicklung im Reaktor während dieser Zeit zeigte die Aktivierung des Katalysators an. Anschließend wurden noch zwei weitere mal 3,5 g Propylenoxid mit Hilfe der HPLC-Pumpe (1 ml/min) zudosiert und die Reaktionsmischung für 20 min gerührt (700 rpm). Das Auftreten einer kurzzeitig erhöhten Wärmeentwicklung im Reaktor während dieser Zeit bestätigte die Aktivierung des Katalysators.

[Schritt (γ)]

Nach Abkühlen auf 100°C wurden unter Rühren (700 rpm) ein Gemisch aus 1,93 g (4 mmol) Bisphenol-A-diglycidylether gelöst in 16,04 g Propylenoxid über eine HPLC-Pumpe (1 mL/min) zudosiert.

[Schritt (δ)]

Direkt im Anschluss wurden unter weiterem Rühren (700 rpm) weitere 44,5 g Propylenoxid über eine HPLC-Pumpe (1 mL/min) zudosiert. Nach Ende der Zugabe von Propylenoxid wurde die Reaktionsmischung noch weitere 2 h bei 100°C gerührt. Durch Abkühlen des Reaktors im Eisbad wurde die Reaktion beendet, der Überdruck wurde abgelassen und das resultierende Produkt analysiert.

Die NMR-spektroskopische Untersuchung des Reaktionsgemisches zeigte einen vollständigen Umsatz des Propylenoxids ($R_{PO}$ = 0%) und des BADGE ($R_{BADGE}$ = 0%).

| | | |
|---|---|---|
| Selektivität | g/e | 0,12 |
| | e/f($A_{carbonat}$) | 0,27 (21,4 % Carbonateinheiten im PEC) |
| $A_{BADGE}$ in % | | 0,42 |
| Molekulargewicht in g/mol | $M_n$ | 5112 |
| | $M_w$ | 13797 |
| Polydispersität | | 1,89 |
| OH-Zahl in $mg_{KOH}$/g | | 28,8 |
| Viskosität in mPa·s | | 5149 |
| Gelpunkt in min | | 13,3 |

**Beispiel 8: Höherfunktionelles Polyethercarbonatpolyol mit einer rechnerischen Funktionalität von 2,8 erhalten durch "späte Zugabe" von BADGE**

[Schritt (α)]

In einem 300 ml Druckreaktor ausgestattet mit Gaseintragsrührer wurde eine Mischung aus DMC-Katalysator (16 mg) und PET-1 (8,7 g) vorgelegt und 30 min bei 130°C unter leichtem Vakuum (50 mbar) und leichtem Ar-Strom gerührt (700 rpm).

[Schritt (β)]

Es wurden 15 bar $CO_2$ aufgepresst, wodurch die Temperatur im Reaktor leicht absank. Die Temperatur wurde auf 130°C nachgeregelt und während der nachfolgenden Schritte der Druck im Reaktor durch Nachdosieren von $CO_2$ bei 15 bar gehalten. Es wurden 3,5 g Propylenoxid mit Hilfe einer HPLC-Pumpe (1 mL/min) zudosiert und die Reaktionsmischung für 20 min gerührt (700 rpm). Auftreten einer kurzzeitig erhöhten Wärmeentwicklung im Reaktor während dieser Zeit zeigte die Aktivierung des Katalysators an. Anschließend wurden noch zwei weitere mal 3,5 g Propylenoxid mit Hilfe der HPLC-Pumpe (1 ml/min) zudosiert und die Reaktionsmischung für 20 min gerührt (700 rpm). Das Auftreten einer kurzzeitig erhöhten Wärmeentwicklung im Reaktor während dieser Zeit bestätigte die Aktivierung des Katalysators.

[Schritt (δ)]

Nach Abkühlen auf 100°C wurden unter weiterem Rühren (700 rpm) weitere 40,7 g Propylenoxid über eine HPLC-Pumpe (1 mL/min) zudosiert.

[Schritt (γ)]

Direkt im Anschluss wurden unter Rühren ein Gemisch aus 1,92 g (4 mmol) Bisphenol-A-diglycidylether gelöst in 16,14 g Propylenoxid sowie anschließend weitere 3,9 g Propylenoxid über eine HPLC-Pumpe (1 mL/min) zudosiert, wobei die Reaktionsmischung weiterhin gerührt wurde (700 rpm). Nach Ende der Zugabe von Propylenoxid wurde die Reaktionsmischung noch weitere 2 h bei 100°C gerührt. Durch Abkühlen des Reaktors im Eisbad wurde die Reaktion beendet, der Überdruck wurde abgelassen und das resultierende Produkt analysiert.

Die NMR-spektroskopische Untersuchung des Reaktionsgemisches zeigte einen vollständigen Umsatz des Propylenoxids ($R_{PO}$ = 0%) und des BADGE ($R_{BADGE}$ = 0%).

| | | |
|---|---|---|
| Selektivität | g/e | 0,11 |
| | e/f($A_{carbonat}$) | 0,27 (21,0 % Carbonateinheiten im PEC) |
| $A_{BADGE}$ in % | | 0,39 |
| Molekulargewicht in g/mol | $M_n$ | 4986 |
| | $M_w$ | 17600 |
| Polydispersität | | 3,53 |
| OH-Zahl in $mg_{KOH}$/g | | 29,3 |
| Viskosität in mPa·s | | 14630 |
| Gelpunkt in min | | 17,0 |

**Vergleich der Beispiele 6 - 8:**

| Beispiel | Zugabe des Verzweigermoleküls | Funktionalität des Produktes | Viskosität mPa·s | Gelpunkt min |
|---|---|---|---|---|
| 7 | Frühe Zugabe | 2,8 | 5149 | 13,3 |
| 8 | Späte Zugabe | 2,8 | 14630 | 17,0 |
| 6 (Vgl.) | --- | 2 | 6980 | 25,6 |

Der Vergleich des Beispiels 7 mit Beispiel 8 zeigt, dass die frühe Zugabe der Verzweigermoleküle vorteilhaft ist, da die Viskosität geringer und die Reaktivität gegenüber Isocyanaten höher ist (kürzere Zeit bis Erreichen des Gelpunktes).

Eine Gegenüberstellung des Beispiels 7 mit dem Vergleichsbeispiel 6 zeigt, dass das höherfunktionelle Polymer im Vergleich zu dem linearen Polymer eine geringere Viskosität und höhere Reaktivität aufweist (kürzere Zeit bis Erreichen des Gelpunktes).

**Beispiel 9: Höherfunktionelles Polyethercarbonatpolyol mit einer rechnerischen Funktionalität von 2,5 erhalten durch "frühe Zugabe" von DED**

[Schritt (α)]

In einem 300 ml Druckreaktor ausgestattet mit Gaseintragsrührer wurde eine Mischung aus DMC-Katalysator (16 mg) und PET-1 (10 g) vorgelegt und 30 min bei 130°C unter leichtem Vakuum (50 mbar) und leichtem Ar-Strom gerührt (700 rpm).

[Schritt (β)]

Es wurden 15 bar $CO_2$ aufgepresst, wodurch die Temperatur im Reaktor leicht absank. Die Temperatur wurde auf 130°C nachgeregelt und während der nachfolgenden Schritte der Druck im Reaktor durch Nachdosieren von $CO_2$ bei 15 bar gehalten. Es wurden 3,5 g Propylenoxid mit Hilfe einer HPLC-Pumpe (1 mL/min) zu dosiert und die Reaktionsmischung für 20 min gerührt (700 rpm). Auftreten einer kurzzeitig erhöhten Wärmeentwicklung im Reaktor während dieser Zeit zeigte die Aktivierung des Katalysators an. Anschließend wurden noch zwei weitere mal 3,5 g Propylenoxid mit Hilfe der HPLC-Pumpe (1 ml/min) zudosiert und die Reaktionsmischung für 20 min gerührt (700 rpm). Das Auftreten einer kurzzeitig erhöhten Wärmeentwicklung im Reaktor während dieser Zeit bestätigte die Aktivierung des Katalysators.

[Schritt (γ)]

Nach Abkühlen auf 100°C wurden unter Rühren ein Gemisch aus 0,68 g (4 mmol) 1,2,9,10-diepoxydecane gelöst in 6,23 g Propylenoxid über eine HPLC-Pumpe (1 mL/min) zudosiert, wobei die Reaktionsmischung weiterhin gerührt wurde (700 rpm).

[Schritt (δ)]

Direkt im Anschluss wurden unter weiterem Rühren (700 rpm) weitere 53,5 g Propylenoxid über eine HPLC-Pumpe (1 mL/min) zudosiert. Nach Ende der Zugabe von Propylenoxid wurde die Reaktionsmischung noch weitere 2 h bei 100°C gerührt. Durch Abkühlen des Reaktors im Eisbad wurde die Reaktion beendet, der Überdruck wurde abgelassen und das resultierende Produkt analysiert.

Die NMR-spektroskopische Untersuchung des Reaktionsgemisches zeigte einen vollständigen Umsatz des Propylenoxids ($R_{PO}$ = 0%) und des DED ($R_{DED}$ = 0%).

| | | |
|---|---|---|
| Selektivität | g/e | 0,10 |
| | e/f($A_{carbonat}$) | 0,26 (21,1 % Carbonateinheiten im PEC) |
| Molekulargewicht in g/mol | $M_n$ | 6419 |
| | $M_w$ | 15219 |
| Polydispersität | | 2,37 |
| OH-Zahl in $mg_{KOH}$/g | | 27,8 |
| Viskosität in mPa·s | | 5461 |
| Gelpunkt in min | | 14,3 |

**Beispiel 10: Höherfunktionelles Polyethercarbonatpolyol mit einer rechnerischen Funktionalität von 2,5 erhalten durch "späte Zugabe" von DED**

[Schritt (α)]

In einem 300 ml Druckreaktor ausgestattet mit Gaseintragsrührer wurde eine Mischung aus DMC-Katalysator (16 mg) und PET-1 (10 g) vorgelegt und 30 min bei 130°C unter leichtem Vakuum (50 mbar) und leichtem Ar-Strom gerührt (700 rpm).

[Schritt (β)]

Es wurden 15 bar $CO_2$ aufgepresst, wodurch die Temperatur im Reaktor leicht absank. Die Temperatur wurde auf 130°C nachgeregelt und während der nachfolgenden Schritte der Druck im Reaktor durch Nachdosieren von $CO_2$ bei 15 bar gehalten. Es wurden 3,5 g Propylenoxid mit Hilfe einer HPLC-Pumpe (1 mL/min) zu dosiert und die Reaktionsmischung für 20 min gerührt (700 rpm). Auftreten einer kurzzeitig erhöhten Wärmeentwicklung im Reaktor während dieser Zeit zeigte die Aktivierung des Katalysators an. Anschließend wurden noch zwei weitere mal 3,5 g Propylenoxid mit Hilfe der HPLC-Pumpe (1 ml/min) zudosiert und die Reaktionsmischung für 20 min gerührt (700 rpm). Das Auftreten einer kurzzeitig erhöhten Wärmeentwicklung im Reaktor während dieser Zeit bestätigte die Aktivierung des Katalysators.

[Schritt (δ)]

Nach Abkühlen auf 100°C wurden unter weiterem Rühren (700 rpm) weitere 51,74 g Propylenoxid über eine HPLC-Pumpe (1 mL/min) zudosiert.

[Schritt (γ)]

Direkt im Anschluss wurden unter Rühren ein Gemisch aus 0,68 g (4 mmol) 1,2,9,10-diepoxydecan gelöst in 6,20 g Propylenoxid sowie anschließend weitere 2 g Propylenoxid über eine HPLC-Pumpe (1 mL/min) zudosiert, wobei die Reaktionsmischung weiterhin gerührt wurde (700 rpm). Nach Ende der Zugabe von Propylenoxid wurde die Reaktionsmischung noch weitere 2 h bei 100°C gerührt. Durch Abkühlen des Reaktors im Eisbad wurde die Reaktion beendet, der Überdruck wurde abgelassen und das resultierende Produkt analysiert.

Die NMR-spektroskopische Untersuchung des Reaktionsgemisches zeigte einen vollständigen Umsatz des Propylenoxids ($R_{PO}$ = 0%) und des DED ($R_{DED}$ = 0%).

| | | |
|---|---|---|
| Selektivität | g/e | 0,11 |
| | e/f($A_{carbonat}$) | 0,29 (22,7 % Carbonateinheiten im PEC) |
| Molekular-gewicht in g/mol | $M_n$ | 4811 |
| | $M_w$ | 19664 |
| Polydispersität | | 4,08 |
| OH-Zahl in $mg_{KOH}$/g | | 27,2 |
| Viskosität in mPa·s | | 14550 |
| Gelpunkt in min | | 19,0 |

**Vergleich der Beispiele 9 - 10 und 6:**

| Beispiel | Zugabe des Verzweigermoleküls | Funktionalität des Produktes | Viskosität mPa·s | Gelpunkt min |
|---|---|---|---|---|
| 9 | Frühe Zugabe | 2,5 | 5461 | 14,3 |
| 10 | Späte Zugabe | 2,5 | 14550 | 19,0 |
| 6 (Vgl.) | --- | 2 | 6980 | 25,6 |

Der Vergleich von Beispiel 9 mit Beispiel 10 zeigt, dass die frühe Zugabe der Verzweigermoleküle vorteilhaft ist, da die Viskosität geringer und die Reaktivität gegenüber Isocyanaten höher ist (kürzere Zeit bis Erreichen des Gelpunktes).

Eine Gegenüberstellung des Beispiels 9 mit dem Vergleichsbeispiel 6 zeigt, dass das höherfunktionelle Polymer im Vergleich zu dem linearen Polymer eine geringere Viskosität und höhere Reaktivität aufweist (kürzere Zeit bis Erreichen des Gelpunktes).

**Patentansprüche**

1. Verfahren zur Herstellung höherfunktioneller Polyethercarbonatpolyole durch Umsetzung von mindestens zweier Alkylenoxide und Kohlendioxid mit H-funktionellen Starterverbindungen in Gegenwart eines Doppelmetallcyanid-Katalysators, **dadurch gekennzeichnet, dass** mindestens eines der Alkylenoxide eine Epoxyfunktionalität von ≥ 2 aufweist.

2. Verfahren nach Anspruch 1 zur Herstellung höherfunktioneller Polyethercarbonatpolyole umfassend die Schritte

    (α) Vorlegen eines Doppelmetallcyanid-Katalysators und

        (αα) eines Suspensionsmittels, das keine H-funktionellen Gruppen enthält und/oder
        (αβ) einer H-funktionellen Starterverbindung,

    (γ) Zudosieren von Kohlendioxid und mindestens zweier Alkylenoxide und
    (δ) Zudosieren von Kohlendioxid und mindestens eines Alkylenoxides, wobei dieses oder diese Alkylenoxide von den im Schritt (γ) zudosierten Alkylenoxiden gleich oder verschieden sein können,

    wobei mindestens eines der Alkylenoxide in Schritt (γ) eine Epoxyfunktionalität von ≥ 2 aufweist und wobei für den Fall, dass in Schritt (α) keine H-funktionelle Starterverbindung vorgelegt wurde, der Schritt (δ) das Zudosieren einer H-funktionellen Starterverbindung umfasst.

3. Verfahren nach Anspruch 2, weiterhin umfassend den Schritt (β) zwischen Schritt (α) und Schritt (γ):

    (β) Zudosieren von Kohlendioxid und mindestens eines Alkylenoxides,

    wobei weiterhin die in Schritt (γ) zudosierten mindestens zwei Alkylenoxide von dem im Schritt (β) zudosierten Alkylenoxid oder zudosierten Alkylenoxiden gleich oder verschieden sein können und das oder die in Schritt (δ) zudosierten Alkylenoxide(e) von den im Schritt (β) und (γ) zudosierten Alkylenoxiden gleich oder verschieden sein können.

4. Verfahren gemäß einem der Ansprüche 1 bis 3, wobei das Polyethercarbonatpolyol gemäß Formel (Ia) ein Verhältnis e/f von 2 : 1 bis 1 : 20 aufweist.

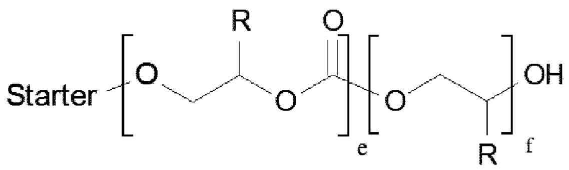
(Ia)

5. Verfahren nach einem der vorhergehenden Ansprüche, wobei mindestens eines der Alkylenoxide mit einer Epoxyfunktionalität von ≥ 2 in Schritt (γ) folgender Formel (I) entspricht,

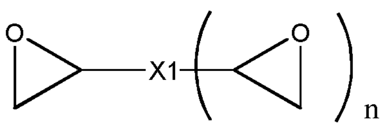
(X),

    wobei X1 eine chemische Bindung oder ein di- oder multivalenter, Heteroatom-enthaltender oder nicht Heteroatom-enthaltender C5-C22 aliphatischer, aromatischer araliphatischer oder cycloaliphatischer Rest und n eine ganze Zahl ≥ 1 ist.

6. Verfahren nach einem der Ansprüche 1-4, wobei mindestens eines der Alkylenoxide mit einer Epoxyfunktionalität von ≥ 2 in Schritt (γ) folgender Formel (II) entspricht,

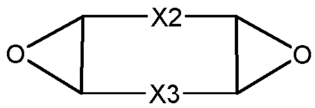

(XI),

wobei X2 und X3 unabhängig voneinander eine chemische Bindung oder Heteroatom-enthaltende oder nicht Heteroatom-enthaltende C5-C22 aliphatische, aromatische, araliphatische oder cycloaliphatische Reste sind.

7. Verfahren nach einem der Ansprüche 1-4, wobei mindestens eines der Alkylenoxide mit einer Epoxyfunktionalität von ≥ 2 in Schritt (γ) folgender Formel (III) entspricht,

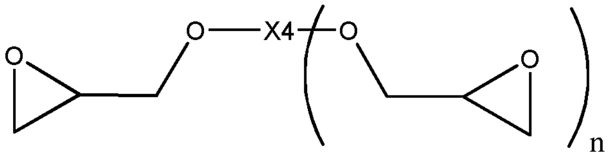

(XII),

wobei X4 ein di- oder multivalenter, Heteroatom-enthaltender oder nicht Heteroatom-enthaltender C5-C22 aliphatischer, aromatischer, araliphatischer oder cycloaliphatischer Rest und n eine ganze Zahl ≥ 1 ist.

8. Verfahren nach einem der vorhergehenden Ansprüche, wobei die Zugabe des oder der Alkylenoxide mit einer Epoxyfunktionalität von ≥ 2 in Schritt (γ) abgeschlossen ist, bevor 50 mol% der Gesamtmenge an Alkylenoxiden zugegeben wurde.

9. Verfahren nach einem der vorhergehenden Ansprüche, wobei wenigstens der Schritt (δ) kontinuierlich durchgeführt wird.

10. Verfahren nach einem der vorhergehenden Ansprüche, wobei Schritt (δ) das kontinuierliche Zudosieren einer H-funktionellen Starterverbindung umfasst.

11. Verfahren nach einem der Ansprüche 1-9, wobei Schritt (δ) das diskontinuierliche Zudosieren einer H-funktionellen Starterverbindung umfasst.

12. Verfahren nach einem der Ansprüche 1-11, wobei in einem zusätzlichen Verfahrensschritt das höherfunktionelle Polyethercarbonatpolyol mit Di- und/oder Polyisocyanaten zur Reaktion gebracht wird.

13. Höherfunktionelles Polyethercarbonatpolyol erhältlich nach einem Verfahren gemäß einem der Ansprüche 1-11.

14. Vernetztes Polyethercarbonat-Polymer erhältlich nach einem Verfahren gemäß Anspruch 12.

15. Verwendung eines vernetzten Polyethercarbonat-Polymers nach Anspruch 14 in duromeren Festkörpern, viskoelastischen Schäumen oder Beschichtungen.

## Claims

1. Process for preparing polyethercarbonate polyols of relatively high functionality by reaction of at least two alkylene oxides and carbon dioxide with H-functional starter compounds in the presence of a double metal cyanide catalyst, **characterized in that**
at least one of the alkylene oxides has an epoxy functionality of ≥ 2.

2. Process according to Claim 1 for preparing polyethercarbonate polyols of relatively high functionality, comprising the steps of

(α) initially introducing a double metal cyanide catalyst and

(αα) a suspension medium that contains no H-functional groups, and/or

(αβ) an H-functional starter compound,

(γ) metering in carbon dioxide and at least two alkylene oxides and
(δ) metering in carbon dioxide and at least one alkylene oxide, it being possible for this or these alkylene oxide(s) to be the same as or different from the alkylene oxides metered in step (γ),

at least one of the alkylene oxides in step (γ) having an epoxy functionality of ≥ 2, and
in the event that no H-functional starter compound was introduced in step (α), step (δ) comprising the metering of an H-functional starter compound.

**3.** Process according to Claim 2, further comprising the following step (β) between step (α) and step (γ):

(β) metering in carbon dioxide and at least one alkylene oxide,

it being possible, furthermore, for the at least two alkylene oxides metered in step (γ) to be the same as or different from the alkylene oxide or alkylene oxides metered in step (β), and it being possible for the alkylene oxide(s) metered in step (δ) to be the same as or different from the alkylene oxides metered in step (β) and (γ).

**4.** Process according to any of Claims 1 to 3, wherein the polyethercarbonate polyol according to formula (Ia) has an e/f ratio of 2: 1 to 1: 20.

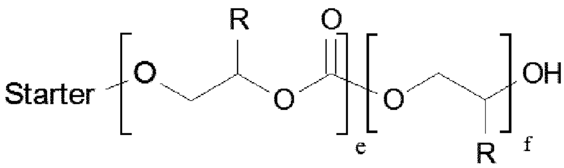

(Ia)

**5.** Process according to any of the preceding claims, at least one of the alkylene oxides having an epoxy functionality of ≥ 2 in step (γ) conforming to the formula (I) below,

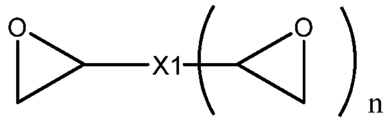

(X),

where X1 is a chemical bond or a di- or multivalent, heteroatom-containing or non-heteroatom-containing C5-C22 aliphatic, aromatic, araliphatic or cycloaliphatic radical and n is an integer ≥ 1.

**6.** Process according to any of Claims 1-4, at least one of the alkylene oxides having an epoxy functionality of ≥ 2 in step (γ) conforming to the formula (II) below,

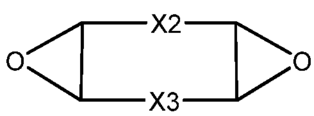

(XI),

where X2 and X3 independently of one another are a chemical bond or are heteroatom-containing or non-heteroatom-containing C5-C22 aliphatic, aromatic, araliphatic or cycloaliphatic radicals.

**7.** Process according to any of Claims 1-4, at least one of the alkylene oxides having an epoxy functionality of ≥ 2 in step (γ) conforming to the formula (III) below,

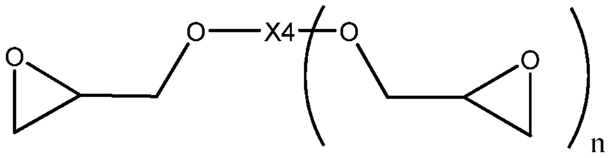

(XII),

where X4 is a di- or polyvalent, heteroatom-containing or non-heteroatom-containing C5-C22 aliphatic, aromatic, araliphatic or cycloaliphatic radical and n is an integer ≥ 1.

**8.** Process according to any of the preceding claims, the addition of the alkylene oxide or oxides having an epoxy functionality of ≥ 2 in step (γ) being concluded before 50 mol% of the total amount of alkylene oxides has been added.

**9.** Process according to any of the preceding claims, at least the step (δ) being carried out continuously.

**10.** Process according to any of the preceding claims, step (δ) comprising the continuous metering of an H-functional starter compound.

**11.** Process according to any of Claims 1-9, step (δ) comprising the discontinuous metering of an H-functional starter compound.

**12.** Process according to any of Claims 1-11, the polyethercarbonate polyol of relatively high functionality being reacted, in an additional process step, with di- and/or polyisocyanates.

**13.** Polyethercarbonate polyol of relatively high functionality, obtainable by a process according to any of Claims 1-11.

**14.** Crosslinked polyethercarbonate polymer obtainable by a process according to Claim 12.

**15.** Use of a crosslinked polyethercarbonate polymer according to Claim 14 in thermoset solids, viscoelastic foams or coatings.

**Revendications**

**1.** Procédé de fabrication de polyéther-carbonate-polyols à fonctionnalité élevée par mise en réaction d'au moins deux oxydes d'alkylène et de dioxyde de carbone avec des composés de départ à fonction H en présence d'un catalyseur de cyanure de deux métaux, **caractérisé en ce qu'**au moins un des oxydes d'alkylène présente une fonctionnalité époxy ≥ 2.

**2.** Procédé selon la revendication 1 pour la fabrication de polyéther-carbonate-polyols à fonctionnalité élevée, comprenant les étapes suivantes :

(α) le chargement d'un catalyseur de cyanure de deux métaux et

(αα) d'un agent de suspension qui ne contient pas de groupes à fonction H et/ou
(αβ) d'un composé de départ à fonction H,

(γ) l'ajout de dioxyde de carbone et d'au moins deux oxydes d'alkylène, et
(δ) l'ajout de dioxyde de carbone et d'au moins un oxyde d'alkylène, ce ou ces oxydes d'alkylène pouvant être identiques ou différents des oxydes d'alkylène ajoutés à l'étape (γ),

au moins un des oxydes d'alkylène à l'étape (γ) présentant une fonctionnalité époxy ≥ 2, et
lorsqu'aucun composé de départ à fonction H n'a été chargé à l'étape (α), l'étape (δ) comprenant l'ajout d'un composé de départ à fonction H.

**3.** Procédé selon la revendication 2, comprenant en outre l'étape (β) entre l'étape (α) et l'étape (γ) :

(β) l'ajout de dioxyde de carbone et d'au moins un oxyde d'alkylène,

lesdits au moins deux oxydes d'alkylène ajoutés à l'étape (γ) pouvant en outre être identiques ou différents de l'oxyde d'alkylène ajouté ou des oxydes d'alkylène ajoutés à l'étape (β), et le ou les oxydes d'alkylène ajoutés à l'étape (δ) pouvant être identiques ou différents des oxydes d'alkylène ajoutés à l'étape (β) et (γ).

**4.** Procédé selon l'une quelconque des revendications 1 à 3, dans lequel le polyéther-carbonate-polyol selon la formule (Ia) présente un rapport e/f de 2:1 à 1:20

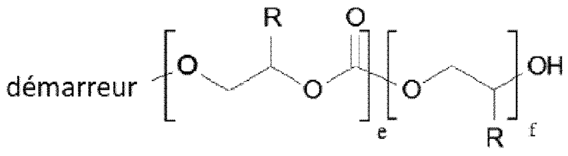

(Ia)

**5.** Procédé selon l'une quelconque des revendications précédentes, dans lequel au moins un des oxydes d'alkylène ayant une fonctionnalité époxy ≥ 2 à l'étape (γ) correspond à la formule (I) suivante :

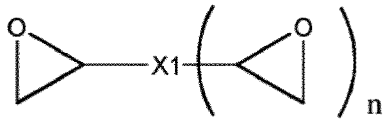

(X),

dans laquelle X1 est une liaison chimique ou un radical di- ou multivalent, contenant des hétéroatomes ou ne contenant pas d'hétéroatomes, en C5-C22, aliphatique, aromatique, araliphatique ou cycloaliphatique, et n est un nombre entier ≥ 1.

**6.** Procédé selon l'une quelconque des revendications 1 à 4, dans lequel au moins un des oxydes d'alkylène ayant une fonctionnalité époxy ≥ 2 à l'étape (γ) correspond à la formule (II) suivante :

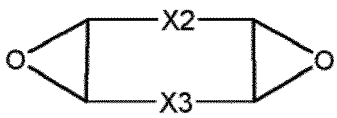

(XI),

dans laquelle X2 et X3 sont indépendamment l'un de l'autre une liaison chimique ou des radicaux contenant des hétéroatomes ou ne contenant pas d'hétéroatomes, en C5-C22, aliphatiques, aromatiques, araliphatiques ou cycloaliphatiques.

**7.** Procédé selon l'une quelconque des revendications 1 à 4, dans lequel au moins un des oxydes d'alkylène ayant une fonctionnalité ≥ 2 à l'étape (γ) correspond à la formule (III) suivante :

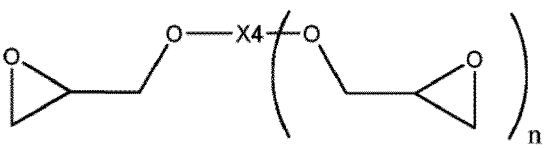

(XII),

dans laquelle X4 est un radical di- ou multivalent, contenant des hétéroatomes ou ne contenant pas d'hétéroatomes, en C5-C22, aliphatique, aromatique, araliphatique ou cycloaliphatique, et n est un nombre entier ≥ 1.

**8.** Procédé selon l'une quelconque des revendications précédentes, dans lequel l'ajout du ou des oxydes d'alkylène ayant une fonctionnalité ≥ 2 à l'étape (γ) est terminée avant que 50 % en moles de la quantité totale d'oxydes d'alkylène ait été ajoutée.

**9.** Procédé selon l'une quelconque des revendications précédentes, dans lequel au moins l'étape (δ) est réalisée en continu.

**10.** Procédé selon l'une quelconque des revendications précédentes, dans lequel l'étape (δ) comprend l'ajout continu d'un composé de départ à fonction H.

**11.** Procédé selon l'une quelconque des revendications 1 à 9, dans lequel l'étape (δ) comprend l'ajout discontinu d'un composé de départ à fonction H.

**12.** Procédé selon l'une quelconque des revendications 1 à 11, dans lequel le polyéther-carbonate-polyol à fonctionnalité élevée est mis en réaction avec des di-et/ou polyisocyanates dans une étape de procédé supplémentaire.

**13.** Polyéther-carbonate-polyol à fonctionnalité élevée pouvant être obtenu par un procédé selon l'une quelconque des revendications 1 à 11.

**14.** Polyéther-carbonate-polymère réticulé pouvant être obtenu par un procédé selon la revendication 12.

**15.** Utilisation d'un polyéther-carbonate-polymère réticulé selon la revendication 14 dans des corps solides duromères, des mousses viscoélastiques ou des revêtements.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- US 20100048935 A1
- WO 2006103213 A1
- WO 2012033375 A2
- US 3699079 A
- US 4789727 A
- WO 2010028362 A1
- WO 2008092767 A1
- EP 1359177 A
- US 3404109 A
- US 3829505 A
- US 3941849 A
- US 5158922 A
- US 5470813 A
- EP 700949 A
- EP 743093 A
- EP 761708 A
- WO 9740086 A1
- WO 9816310 A1
- WO 0047649 A1
- JP 4145123 B
- WO 9740086 A
- WO 0139883 A
- WO 0180994 A


### In der Beschreibung aufgeführte Nicht-Patentliteratur


- **INOUE et al.** Copolymerization of Carbon Dioxide and Alkylenoxide with Organometallic Compounds. *Die Makromolekulare Chemie,* 1969, vol. 130, 210-220
- **REN-JIAN WEI et al.** Synthesis of bis(cyclic carbonate) and proylenecarbonate. *RSC ADVANCES,* 22. Juli 2013, vol. 3, 17307-17313
- *Chemical Communications,* 2011, vol. 47, 141-163